# EUROPEAN PATENT APPLICATION

(11) **EP 4 626 122 A1**
(43) Date of publication of application: **01.10.2025**
(21) Application number: 23902431.8
(22) Date of filing: 21.11.2023
(51) Int. Cl.: H04W 72/566

(54) **SERVICE FLOW SCHEDULING METHOD AND APPARATUS**

(30) Priority: 13.12.2022 CN 202211604610
(71) Applicant: Huawei Technologies Co., Ltd., Shenzhen, Guangdong 518129 (CN)
(72) Inventor: HU, Xiang, Shenzhen Guangdong 518129 (CN)
(74) Representative: Gill Jennings & Every LLP
(86) International application number: PCT/CN2023/132949
(87) International publication number: WO 2024/125232

(57) **Abstract**

A service flow scheduling method and an apparatus are provided. The method includes: A user plane network element obtains a scheduling priority level of a first service flow, where the scheduling priority level of the first service flow is a scheduling priority level of the first service flow in a plurality of service flows, and the first service flow is one of the plurality of service flows. The user plane network element receives a packet. The user plane network element schedules the first service flow based on the scheduling priority level of the first service flow when the packet belongs to the first service flow. By using the foregoing design, scheduling priority levels of different service flows in the plurality of service flows can be distinguished, and scheduling can be performed based on the scheduling priority levels of the different service flows.

## Description

### CROSS-REFERENCE TO RELATED APPLICATIONS

This application claims priority to Chinese Patent Application No. 202211604610.3, filed with the China National Intellectual Property Administration on December 13, 2022 and entitled "SERVICE FLOW SCHEDULING METHOD AND APPARATUS", which is incorporated herein by reference in its entirety.

### TECHNICAL FIELD

Embodiments of this application relate to the field of wireless communication, and in particular, to a service flow scheduling method and an apparatus.

### BACKGROUND

In a 5th generation mobile communication technology (5th generation mobile communication technology, 5G) system, a quality of service flow (QoS Flow) may carry a lot of content, and each QoS flow may carry a plurality of services.

Currently, parameters that describe packet forwarding processing of a QoS flow between a terminal device and a user plane network element may include the following parameters: a resource type, a priority level (priority level), a packet delay budget (including a core network packet delay budget), a packet error rate, an average window, a maximum data burst volume, and the like.

The priority level in the foregoing parameters is used only for priority level scheduling between different QoS flows. Because each QoS flow may carry the plurality of services, service flows corresponding to different services may have different priority level requirements. However, currently, differentiated scheduling cannot be implemented for service flows corresponding to different services in a QoS flow.

In addition, the same problem also exists in another possible scenario in which a plurality of service flows share one fixed bandwidth.

### SUMMARY

This application provides a service flow scheduling method and an apparatus, to resolve a problem that differentiated scheduling cannot be performed on a plurality of service flows when the plurality of service flows share one fixed bandwidth.

According to a first aspect, this application provides a service flow scheduling method. The method includes:
A user plane network element obtains, a scheduling priority level of a first service flow, where the scheduling priority level of the first service flow is a scheduling priority level of the first service flow in a plurality of service flows, and the first service flow is one of the plurality of service flows. The user plane network element receives a packet. The user plane network element schedules the first service flow based on the scheduling priority level of the first service flow when the packet belongs to the first service flow.

By using the foregoing design, the user plane network element can obtain the scheduling priority level of the service flow, and then can schedule service flows with different scheduling priority levels, to implement differentiated scheduling on the plurality of service flows.

In a possible design, when the user plane network element obtains the scheduling priority level of the first service flow, the user plane network element receives a first rule from a session management network element, where the first rule indicates the scheduling priority level of the first service flow.

In a possible design, the first rule includes a name of a first predefined rule, the first predefined rule includes the scheduling priority level of the first service flow, and the first predefined rule is one of a plurality of predefined rules stored by the user plane network element.

By using the foregoing design, the user plane network element can obtain the plurality of predefined rules in advance, and activate the first predefined rule when obtaining the name of the first predefined rule.

In a possible design, the user plane network element further obtains a bandwidth parameter of the first service flow, where the bandwidth parameter of the first service flow includes a guaranteed bandwidth of the first service flow and/or a maximum bandwidth of the first service flow, or the bandwidth parameter of the first service flow includes a guaranteed bandwidth ratio of the first service flow and/or a maximum bandwidth ratio of the first service flow, where the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

By using the foregoing design, the user plane network element can ensure the guaranteed bandwidth of the service flow when scheduling the service flow, and ensure the maximum bandwidth of the service flow based on the scheduling priority level of the service flow.

In a possible design, the first predefined rule further includes the bandwidth parameter of the first service.

In a possible design, when the plurality of service flows belong to a same QoS flow, the first rule includes an identifier of a QoS enforcement rule, and the QoS enforcement rule includes the scheduling priority level of the first service flow.

By using the foregoing design, the scheduling priority level of the first service flow can be added to the QoS enforcement rule by extending the QoS enforcement rule.

In a possible design, the QoS enforcement rule further includes the bandwidth parameter of the first service flow.

In a possible design, when the plurality of service flows belong to a same QoS flow, the first rule is a packet detection rule.

In a possible design, in a case that the user plane network element schedules the first service flow based on the scheduling priority level of the first service flow, when a sum of required bandwidths respectively corresponding to the plurality of service flows is greater than the total bandwidth, if the plurality of service flows include a second service flow, and a guaranteed bandwidth of the second service flow is greater than a required bandwidth of the second service flow, a bandwidth that is equal to the required bandwidth of the second service flow is allocated to the second service flow; and based on scheduling priority levels respectively corresponding to the plurality of service flows and the required bandwidths respectively corresponding to the plurality of service flows, a difference bandwidth is allocated to service flows in the plurality of service flows except the second service flow in descending order of scheduling priority levels, where the difference bandwidth is a difference between the guaranteed bandwidth of the second service flow and the required bandwidth of the second service flow.

By using the foregoing design, for a service flow whose guaranteed bandwidth is greater than a required bandwidth, the required bandwidth of the service flow can be ensured, and based on scheduling priority levels and required bandwidths of other service flows, the difference bandwidth is allocated to the service flows, thereby improving utilization efficiency of the total bandwidth.

In a possible design, in a case that the user plane network element schedules the first service flow based on the scheduling priority level of the first service flow, when a sum of required bandwidths respectively corresponding to the plurality of service flows is greater than the total bandwidth, guaranteed bandwidth ratios respectively corresponding to the plurality of service flows are met, where a sum of the guaranteed bandwidth ratios respectively corresponding to the plurality of service flows is less than or equal to 1; and if there is a remaining bandwidth in the total bandwidth, based on scheduling priority levels respectively corresponding to the plurality of service flows, the remaining bandwidth is allocated to some or all of the plurality of service flows in descending order of scheduling priority levels.

By using the foregoing design, when the required bandwidths of the service flows are all greater than the corresponding guaranteed bandwidths, the guaranteed bandwidths of the service flows are preferentially ensured, and the remaining bandwidth is allocated to the service flows based on the scheduling priority levels and the required bandwidths of the service flows. Therefore, the guaranteed bandwidths of the service flows can be ensured, and a required bandwidth of a service flow with a high scheduling priority level can be preferentially met.

In a possible design, when the remaining bandwidth is allocated to some or all of the plurality of service flows in descending order of scheduling priority levels, maximum bandwidth ratios of the some or all of the plurality of service flows are met in the order.

By using the foregoing design, the remaining bandwidth can be allocated to the service flows based on the scheduling priority levels, the required bandwidths, and the maximum bandwidth ratios of the service flows, so that a maximum bandwidth ratio of a service flow with a high scheduling priority level can be preferentially met.

In a possible design, a sum of actual bandwidths respectively corresponding to the plurality of service flows is equal to the total bandwidth.

By using the foregoing design, utilization efficiency of the total bandwidth can be improved.

In a possible design, the packet is a downlink packet; the user plane network element adds the scheduling priority level of the first service flow to the downlink packet, to obtain a first to-be-sent downlink packet; and the user plane network element sends the first to-be-sent downlink packet to an access network device.

By using the foregoing design, the scheduling priority level of the service flow can be transmitted to the access network device via the downlink packet.

In a possible design, the first to-be-sent downlink packet includes a general packet radio service tunneling protocol packet header, and the general packet radio service tunneling protocol packet header includes the scheduling priority level of the first service flow.

In a possible design, the packet is a downlink packet, and the user plane network element adds a reflective QoS indication and a QoS flow identifier of the QoS flow to the downlink packet, to obtain a second to-be-sent downlink packet. The user plane network element sends the second to-be-sent downlink packet to an access network device.

By using the foregoing design, the reflective QoS indication and the QoS flow identifier of the QoS flow can be transmitted to the access network device via the downlink packet, so that the access network device transmits the reflective QoS indication and the QoS flow identifier of the QoS flow to a terminal device.

In a possible design, the second to-be-sent downlink packet includes a general packet radio service tunneling protocol packet header, and the general packet radio service tunneling protocol packet header includes the reflective QoS indication and the QoS flow identifier of the QoS flow.

In a possible design, the plurality of service flows are service flows respectively corresponding to a plurality of terminal devices, and the plurality of terminal devices belong to a same terminal device group.

In a possible design, the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

In a possible design, the plurality of service flows belong to a same QoS flow.

According to a second aspect, this application provides a service flow scheduling method. The method includes: A session management network element obtains a scheduling priority level of a first service flow, where the scheduling priority level of the first service flow is a scheduling priority level of the first service flow in a plurality of service flows, and the first service flow is one of the plurality of service flows. The session management network element sends a first rule to a user plane network element, where the first rule indicates the scheduling priority level of the first service flow.

By using the foregoing design, the session management network element can obtain the scheduling priority level of the service flow, and indicate the scheduling priority level of the service flow to the user plane network element by using the first rule, so that the user plane network element can schedule service flows with different scheduling priority levels based on the scheduling priority levels of the service flows, to implement differentiated scheduling on the plurality of service flows.

In a possible design, when the session management network element obtains the scheduling priority level of the first service flow, the session management network element receives a policy and charging control rule from a policy control network element, where the policy and charging control rule indicates the scheduling priority level of the first service flow; and the session management network element determines the first rule according to the policy and charging control rule.

By using the foregoing design, the session management network element can receive the policy and charging control rule from the policy control network element, and then determine the first rule according to the policy and charging control rule.

In a possible design, the policy and charging control rule includes a name of a first predefined rule, the first rule includes the name of the first predefined rule, the first predefined rule includes the scheduling priority level of the first service flow, and the first predefined rule is one of a plurality of predefined rules stored by the session management network element and the user plane network element.

By using the foregoing design, the session management network element can obtain the plurality of predefined rules in advance, activate the first predefined rule when obtaining the name of the first predefined rule, and include the name of the first predefined rule in the first rule.

In a possible design, the policy and charging control rule includes the scheduling priority level of the first service flow, the first rule includes an identifier of a QoS enforcement rule, and the QoS enforcement rule includes the scheduling priority level of the first service flow.

By using the foregoing design, the scheduling priority level of the first service flow can be added to the QoS enforcement rule by extending the QoS enforcement rule.

In a possible design, the session management network element determines a QoS rule according to the policy and charging control rule, where the QoS rule includes the scheduling priority level of the first service flow; and the session management network element sends the QoS rule to a terminal device.

In a possible design, the first predefined rule further includes a reflective QoS indication.

In a possible design, the policy and charging control rule further includes a reflective QoS indication, and the first rule further includes the reflective QoS indication.

In a possible design, the session management network element further obtains a bandwidth parameter of the first service flow, where the bandwidth parameter of the first service flow includes a guaranteed bandwidth of the first service flow and/or a maximum bandwidth of the first service flow, or the bandwidth parameter of the first service flow includes a guaranteed bandwidth ratio of the first service flow and/or a maximum bandwidth ratio of the first service flow, where the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

In a possible design, the QoS rule further includes the bandwidth parameter of the first service flow.

In a possible design, the plurality of service flows are service flows respectively corresponding to a plurality of terminal devices, and the plurality of terminal devices belong to a same terminal device group.

In a possible design, the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

In a possible design, the plurality of service flows belong to a same quality of service QoS flow.

According to a third aspect, this application provides a service flow scheduling method. The method includes:

An access network device receives a packet in a first service flow, where the packet includes a scheduling priority level of the first service flow, the scheduling priority level of the first service flow is a scheduling priority level of the first service flow in a plurality of service flows, and the first service flow is one of the plurality of service flows. The access network device schedules the first service flow based on the scheduling priority level of the first service flow.

By using the foregoing design, the access network device can schedule the service flow based on the scheduling priority level that is of the service flow and that is in the received packet, so that service flows with different scheduling priority levels can be scheduled, to implement differentiated scheduling on the plurality of service flows.

In a possible design, the packet further includes a bandwidth parameter of the first service flow, and the bandwidth parameter of the first service flow includes a guaranteed bandwidth ratio of the first service flow and/or a maximum bandwidth ratio of the first service flow; and

The guaranteed bandwidth ratio of the first service flow is a ratio of a guaranteed bandwidth of the first service flow to a total bandwidth, the maximum bandwidth ratio of the first service flow is a ratio of a maximum bandwidth that can be occupied by the first service flow to the total bandwidth, and the total bandwidth is a shared bandwidth allocated to the plurality of service flows.

In a possible design, in a case that the access network device schedules the first service flow based on the scheduling priority level of the first service flow, when a sum of required bandwidths respectively corresponding to the plurality of service flows is greater than the total bandwidth, if the plurality of service flows include a second service flow, and a guaranteed bandwidth of the second service flow is greater than a required bandwidth of the second service flow, a bandwidth that is equal to the required bandwidth of the second service flow is allocated to the second service flow; and based on scheduling priority levels respectively corresponding to the plurality of service flows and the required bandwidths respectively corresponding to the plurality of service flows, a difference bandwidth is allocated to service flows in the plurality of service flows except the second service flow in descending order of scheduling priority levels, where the difference bandwidth is a difference between the guaranteed bandwidth of the second service flow and the required bandwidth of the second service flow.

By using the foregoing design, for a service flow whose guaranteed bandwidth is greater than a required bandwidth, the required bandwidth of the service flow can be ensured, and based on scheduling priority levels and required bandwidths of other service flows, the difference bandwidth is allocated to the service flows, thereby improving utilization efficiency of the total bandwidth.

In a possible design, in a case that the access network device schedules the first service flow based on the scheduling priority level of the first service flow, when a sum of required bandwidths respectively corresponding to the plurality of service flows is greater than the total bandwidth, guaranteed bandwidth ratios respectively corresponding to the plurality of service flows are met, where a sum of the guaranteed bandwidth ratios respectively corresponding to the plurality of service flows is less than or equal to 1; and if there is a remaining bandwidth in the total bandwidth, based on scheduling priority levels respectively corresponding to the plurality of service flows, the remaining bandwidth is allocated to some or all of the plurality of service flows in descending order of scheduling priority levels.

By using the foregoing design, when the required bandwidths of the service flows are all greater than the corresponding guaranteed bandwidths, the guaranteed bandwidths of the service flows are preferentially ensured, and the remaining bandwidth is allocated to the service flows based on the scheduling priority levels and the required bandwidths of the service flows. Therefore, the guaranteed bandwidths of the service flows can be ensured, and a required bandwidth of a service flow with a high scheduling priority level can be preferentially met.

In a possible design, when the remaining bandwidth is allocated to some or all of the plurality of service flows in descending order of scheduling priority levels, maximum bandwidth ratios of the some or all of the plurality of service flows are met in the order.

By using the foregoing design, the remaining bandwidth can be allocated to the service flows based on the scheduling priority levels, the required bandwidths, and the maximum bandwidth ratios of the service flows, so that a maximum bandwidth ratio of a service flow with a high scheduling priority level can be preferentially met.

In a possible design, a sum of actual bandwidths respectively corresponding to the plurality of service flows is equal to the total bandwidth.

By using the foregoing design, utilization efficiency of the total bandwidth can be improved.

In a possible design, the packet includes a general packet radio service tunneling protocol packet header, and the general packet radio service tunneling protocol packet header includes the scheduling priority level of the first service flow.

In a possible design, the plurality of service flows are service flows respectively corresponding to a plurality of terminal devices, and the plurality of terminal devices belong to a same terminal device group.

In a possible design, the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

In a possible design, the plurality of service flows belong to a same QoS flow.

According to a fourth aspect, this application provides a service flow scheduling method. The method includes:
A terminal device obtains a QoS rule, where the QoS rule includes a scheduling priority level of a first service flow, the first service flow is a service to which the terminal device subscribes, and the scheduling priority level of the first service flow is a scheduling priority level of the first service flow in a QoS flow. The terminal device generates an uplink packet. When the uplink packet belongs to the first service flow, the terminal device schedules the first service flow based on the scheduling priority level of the first service flow.

By using the foregoing design, the terminal device can schedule the uplink packet in the service flow based on the scheduling priority level that is of the service flow and that is in the QoS rule.

In a possible design, when the terminal device obtains the QoS rule, the terminal device receives the QoS rule from a session management network element.

In a possible design, when the terminal device obtains the QoS rule, the terminal device receives a downlink packet, where the downlink packet includes the scheduling priority level of the first service flow, a reflective QoS indication, and a QoS flow identifier of the QoS flow. The terminal device generates the QoS rule based on a 5-tuple of the first service flow, the scheduling priority level of the first service flow, the QoS flow identifier of the QoS flow, and the reflective QoS indication.

By using the foregoing design, the terminal device can generate the QoS rule based on information such as the scheduling priority level of the first service flow and the reflective QoS indication that are in the downlink packet.

In a possible design, the QoS flow rule further includes a bandwidth parameter of the first service flow, where the bandwidth parameter of the first service flow includes a guaranteed bandwidth of the first service flow and/or a maximum bandwidth of the first service flow, or the bandwidth parameter of the first service flow includes a guaranteed bandwidth ratio of the first service flow and/or a maximum bandwidth ratio of the first service flow, where the guaranteed bandwidth ratio of the first service flow is a ratio of a minimum bandwidth occupied by the first service flow to a total bandwidth corresponding to the QoS flow, and the maximum bandwidth ratio of the first service flow is a ratio of the maximum bandwidth occupied by the first service flow to the total bandwidth corresponding to the QoS flow.

In a possible design, in a case that the terminal device schedules the first service flow based on the scheduling priority level of the first service flow, when a sum of required bandwidths respectively corresponding to the plurality of service flows is greater than the total bandwidth, if the plurality of service flows include a second service flow, and a guaranteed bandwidth of the second service flow is greater than a required bandwidth of the second service flow, a bandwidth that is equal to the required bandwidth of the second service flow is allocated to the second service flow; and based on scheduling priority levels respectively corresponding to the plurality of service flows and the required bandwidths respectively corresponding to the plurality of service flows, a difference bandwidth is allocated to service flows in the plurality of service flows except the second service flow in descending order of scheduling priority levels, where the difference bandwidth is a difference between the guaranteed bandwidth of the second service flow and the required bandwidth of the second service flow.

By using the foregoing design, for a service flow whose guaranteed bandwidth is greater than a required bandwidth, the required bandwidth of the service flow can be ensured, and based on scheduling priority levels and required bandwidths of other service flows, the difference bandwidth is allocated to the service flows, thereby improving utilization efficiency of the total bandwidth.

In a possible design, in a case that the terminal device schedules the first service flow based on the scheduling priority level of the first service flow, when the bandwidth parameter of the first service flow includes the guaranteed bandwidth ratio of the first service flow, if a sum of required bandwidths respectively corresponding to at least one service carried in the QoS flow is greater than the total bandwidth corresponding to the QoS flow, guaranteed bandwidth ratios of all services are sequentially met in descending order of scheduling priority levels based on a scheduling priority level of each of the at least one service carried in the QoS flow, where the at least one service includes the first service flow, and a sum of guaranteed bandwidth ratios respectively corresponding to the at least one service is less than or equal to 1.

By using the foregoing design, when the required bandwidths of the service flows are all greater than the corresponding guaranteed bandwidths, the guaranteed bandwidths of the service flows are preferentially ensured, and the remaining bandwidth is allocated to the service flows based on the scheduling priority levels and the required bandwidths of the service flows. Therefore, the guaranteed bandwidths of the service flows can be ensured, and a required bandwidth of a service flow with a high scheduling priority level can be preferentially met.

In a possible design, when the remaining bandwidth is allocated to some or all of the plurality of service flows in descending order of scheduling priority levels, maximum bandwidth ratios of the some or all of the plurality of service flows are met in the order.

By using the foregoing design, the remaining bandwidth can be allocated to the service flows based on the scheduling priority levels, the required bandwidths, and the maximum bandwidth ratios of the service flows, so that a maximum bandwidth ratio of a service flow with a high scheduling priority level can be preferentially met.

In a possible design, a sum of actual bandwidths respectively corresponding to the plurality of service flows is equal to the total bandwidth.

By using the foregoing design, utilization efficiency of the total bandwidth can be improved.

In a possible design, the terminal device adds the scheduling priority level of the first service flow to the uplink packet, to obtain a to-be-sent uplink packet; and the terminal device sends the to-be-sent uplink packet to an access network device.

By using the foregoing design, the terminal device can add the scheduling priority level of the service flow to the uplink packet.

In a possible design, the to-be-sent uplink packet includes a general packet radio service tunneling protocol packet header, and the general packet radio service tunneling protocol packet header includes the scheduling priority level of the first service flow.

According to a fifth aspect, an embodiment of this application provides a communication apparatus, including units configured to perform steps in any one of the foregoing aspects.

According to a sixth aspect, an embodiment of this application provides a communication device, including at least one processing element and at least one storage element. The at least one storage element is configured to store a program and data. The at least one processing element is configured to read and execute the program and the data that are stored in the storage element, so that the method provided in any one of the foregoing aspects of this application is implemented.

According to a seventh aspect, an embodiment of this application further provides a computer program. When the computer program is run on a computer, the computer is enabled to perform the method provided in any one of the foregoing aspects.

According to an eighth aspect, an embodiment of this application further provides a computer-readable storage medium. The computer-readable storage medium stores a computer program. When the computer program is executed by a computer, the computer is enabled to perform the method provided in any one of the foregoing aspects.

According to a ninth aspect, an embodiment of this application further provides a chip. The chip is configured to read a computer program stored in a memory, to perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

According to an eleventh aspect, a communication system is provided, including the communication apparatus according to the third aspect and the communication apparatus according to the fourth aspect.

In this application, based on implementations provided in the foregoing aspects, the implementations may be further combined to provide more implementations.

### BRIEF DESCRIPTION OF DRAWINGS

FIG. 1 is a diagram of an architecture of a mobile communication system to which this application is applied;
FIG. 2 is an overview flowchart of a service flow scheduling method according to an embodiment of this application;
FIG. 3A and FIG. 3B are a flowchart of service flow scheduling in a 5G communication system according to an embodiment of this application;
FIG. 4A and FIG. 4B are another flowchart of service flow scheduling in a 5G communication system according to an embodiment of this application;
FIG. 5A and FIG. 5B are still another flowchart of service flow scheduling in a 5G communication system according to an embodiment of this application;
FIG. 6 is still yet another flowchart of service flow scheduling in a 5G communication system according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application. It is clear that embodiments described are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c may be in a singular form or a plural form.

To facilitate understanding of the technical solutions in embodiments of this application, the following first briefly describes related conventional technologies.

The technical solutions provided in embodiments of this application may be applied to various communication systems. For example, the technical solutions may be applied to a 4G system or a 5G system, or may be applied to another future-oriented new system. This is not limited in embodiments of this application. In addition, the terms "system" and "network" are interchangeable.

### 1. 5G system

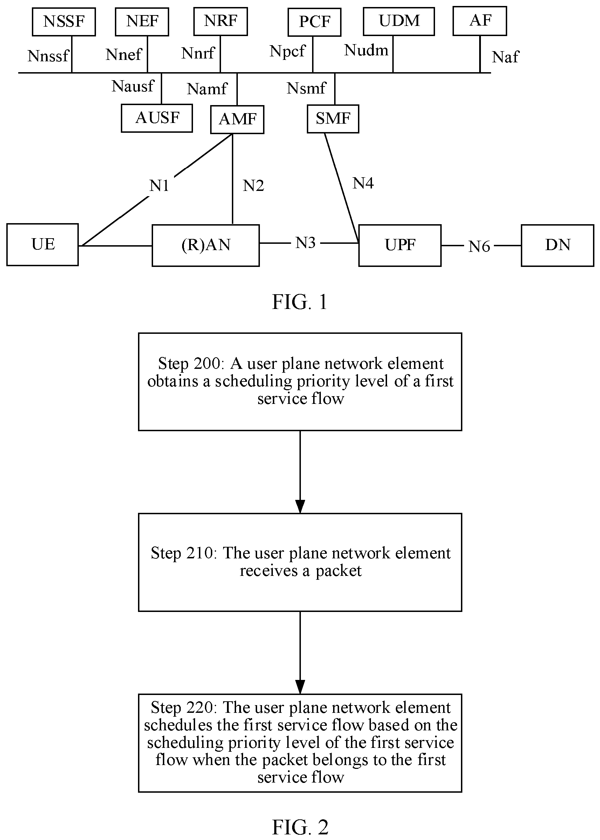

FIG. 1 is a diagram of an architecture of a 5G communication system formulated in the 3rd generation partnership project (3rd generation partnership project, 3GPP) standard. The communication system includes a terminal device (for example, user equipment (user equipment, UE)), a radio access network (radio access network, RAN), and a core network (Core network, CN). Logically, for a data network (data network, DN), network elements of the core network may be classified into two parts: a user plane and a control plane. The control plane is responsible for mobile network management, and the user plane is responsible for service data transmission.

The terminal device is an entrance for interaction between a mobile user and a network, and can provide a basic computing capability and a storage capability, display a service window to the user, and receive a user operation input. A next generation terminal device (NextGen UE) may establish a signal connection and a data connection to the RAN by using a new radio technology, to transmit a control signal and service data to a mobile network. The terminal device may include various handheld devices, vehicle-mounted devices, and wearable devices that have a wireless communication function, computing devices or other processing devices connected to a wireless modem, and various forms of terminals, mobile stations (mobile stations, MSs), terminals (terminals), soft terminals, and the like, for example, water meters, electricity meters, and sensors.

The RAN is deployed near the terminal device, provides a network access function for an authorized user in a specific area, and can determine transmission tunnels of different quality based on a user level, a service requirement, and the like to transmit user data. The RAN can manage resources of the RAN, properly use the resources, provide an access service for the terminal device on demand, and is responsible for forwarding a control signal and user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached, allocates a network resource to the terminal device when the terminal device has a service request, updates a network resource for the terminal device when the terminal device moves, provides a fast recovery mechanism for the terminal device when the terminal device is idle, releases a network resource for the terminal device when the terminal device is detached, and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

The data network (data network, DN) is a data network that provides a business service for the user. Generally, a client is located on the terminal device, and a server is located in the data network. The data network may be a private network, for example, a local area network, or may be an external network that is not managed or controlled by an operator, for example, the internet (Internet), or may be a dedicated network jointly deployed by operators, for example, a network that provides an IP multimedia network subsystem (IP multimedia core network subsystem, IMS) service.

A network architecture of a next generation core network device is readjusted based on the 5G network architecture. Generally, the control plane uses a service-based interface to provide a related function externally. The control plane and the user plane exchange a message through an N4 interface to implement delivery of a user policy from the control plane to the user plane and event reporting from the user plane to the control plane. According to a current network architecture, a policy control network element is responsible for functions of defining, delivering, and updating a user policy that the user subscribes to, and a session management network element needs to be responsible for management of selection of a user plane network element, policy delivery, event reporting, and non-session-level management functions such as heartbeat checking of the user plane network element, and load reporting of the user plane network element. The user plane network element is responsible for performing service awareness, rule and policy matching, charging and control policy execution, and the like on a data packet of the user based on a session context established by the session management network element for the terminal device and according to a policy of the terminal device.

A core network user plane includes a user plane function (user plane function, UPF). A core network control plane includes an access and mobility management function (access and mobility management function, AMF), a session management function (session management function, SMF), a network exposure function (network exposure function, NEF), a network function repository function (NF repository function, NRF), unified data management (unified data management, UDM), a policy control function (policy control function, PCF), an application function (application function, AF), an authentication server function (authentication server function, AUSF), and a network slice selection function (network slice selection function, NSSF).

The core network control plane uses a service-oriented architecture. Control plane network elements interact with each other in a service invoking manner to replace a point-to-point communication manner in a conventional architecture. In the service-oriented architecture, the control plane network element exposes a service to another control plane network element, so that the another control plane network element invokes the service. In point-to-point communication, a communication interface between control plane network elements stores a set of specific messages, and the messages can be used only when the control plane network elements at two ends of the interface perform communication.

The following briefly describes functions of some functional entities in the core network.
1. A session management network element is mainly used for session management, terminal device IP address allocation and management, selection of a manageable user equipment plane function, termination of interfaces towards policy control or charging functions, downlink data notification, and the like. In 5G communication, the session management network element may be an SMF network element. In future communication such as 6G communication, the session management function network element may still be the SMF network element or have another name. This is not limited in this application. Nsmf is a service-based interface provided by the SMF. The SMF may communicate with another network function through Nsmf.
2. An access management network element is mainly used for mobility management, access management, and the like. For example, the access management network element may be a mobility management entity (mobility management entity, MME) function in a 4G communication network or an AMF network element in a 5G network. In future communication such as 6G communication, the access management network element may still be the AMF network element or have another name. This is not limited in this application. Namf is a service-based interface provided by the AMF. The AMF may communicate with another network function through Namf.
3. A network exposure network element is mainly configured to securely expose, to the outside, a service, a capability, and the like that are provided by a 3GPP network function. In 5G communication, the network exposure network element may be an NEF network element. In future communication such as 6G communication, the network exposure network element may still be the NEF network element or have another name. This is not limited in this application. Nnef is a service-based interface provided by the NEF. The NEF may communicate with another network function through Nnef.
4. A network repository network element is configured to: provide service registration, discovery, and authorization, and maintain available network function (network function, NF) instance information, to implement on-demand configuration of a network function and a service and interconnection between NFs. In 5G communication, the network repository network element may be an NRF network element. In future communication such as 6G communication, the network repository network element may still be the NRF network element or have another name. This is not limited in this application. Nnrf is a service-based interface provided by the NRF. The NRF may communicate with another network function through Nnrf.
5. A policy control network element is configured to: guide a unified policy framework for network behavior, and provide policy rule information and the like for a control plane function network element (for example, the AMF or the SMF). In 5G communication, the policy control network element may be a PCF network element. In future communication such as 6G communication, the policy control network element may still be the PCF network element or have another name. This is not limited in this application. Npcf is a service-based interface provided by the PCF. The PCF may communicate with another network function through Npcf.
6. A data management network element is used for user identifier processing, subscription, access authentication, registration, mobility management, or the like. In 5G communication, the data management network element may be a UDM network element. In future communication such as 6G communication, the data management network element may still be the UDM network element or have another name. This is not limited in this application. Nudm is a service-based interface provided by the UDM. The UDM may communicate with another network function through Nudm.
7. An application network element is configured to: perform application-affected data routing, access the network exposure function, interact with a policy framework to perform policy control, or the like. In 5G communication, the application network element may be an AF network element. In future communication such as 6G communication, the application network element may still be the AF network element or have another name. This is not limited in this application. Naf is a service-based interface provided by the AF. The AF may communicate with another network function through Naf.
8. A user plane network element is used for packet routing and forwarding, quality of service (quality of service, QoS) handling for user plane data, or the like. In 5G communication, the user plane network element may be a user plane function (user plane function, UPF) network element. In future communication such as 6G communication, the user plane network element may still be the UPF network element or have another name. This is not limited in this application.
9. An authentication server network element is mainly used for user authentication or the like. In 5G communication, the authentication server network element may be an AUSF network element. In future communication such as 6G communication, the authentication server network element may still be the AUSF network element or have another name. This is not limited in this application. Nausf is a service-based interface provided by the AUSF. The AUSF may communicate with another network function through Nausf.
10. A network slice selection function network element is configured to select a network slice for the terminal device. In 5G communication, the network slice selection function network element may be an NSSF network element. In future communication such as 6G communication, the network slice selection function network element may still be the NSSF network element or have another name. This is not limited in this application.

It may be understood that the core network may further include another network element. This is not limited in this application.

### 2. QoS

Each QoS flow is uniquely identified by a quality of service flow identifier (QoS flow ID, QFI), and the QFI is unique in each PDU session.

5G QoS is classified into two types: a guaranteed bit rate flow (GBR QoS flow) and a non-guaranteed bit rate flow (Non-GBR QoS flow), and may specifically include but is not limited to the following parameters: a 5G QoS identifier (5G QoS identifier, 5QI) (corresponding to a QoS level) and an allocation and retention priority (allocation and retention priority, ARP).

The guaranteed bit rate flow may include but is not limited to the following dedicated parameters: a guaranteed bit flow rate, a maximum bit flow rate, notification control (notification control), a maximum tolerable packet loss rate (uplink/downlink voice media) (maximum packet loss rate-UL/DL (voice media)), and the like. The non-guaranteed bit rate flow may include but is not limited to the following dedicated parameters: a total maximum bit rate of a single PDU session (session-AMBR), a total maximum bit rate of UE (UE-AMBR), a reflective QoS attribute (reflective QoS attribute, RQA), and the like.

In a 5G QoS flow mapping manner, in a downlink data transmission process, the UPF maps a data packet to a QoS flow based on a service data flow (service data flow, SDF) template, and marks a QFI in an N3 tunnel header. An access network (access network, AN) device maps the data packet to a data radio bearer (data radio bearer, DBR) based on the QFI, and transmits the data packet to the UE. In an uplink data transmission process, a non-access stratum (non-access stratum, NAS) of the UE maps a data packet to a QoS flow according to a QoS rule, and an access stratum (access stratum, AS) is responsible for mapping the QoS flow to a DRB. The QoS rule includes a QFI corresponding to the QoS flow, a packet filtering set, and a priority level value. The AN marks the QFI in an N3 tunnel header based on the QFI of the data packet received on the DRB. The UPF receives the data packet sent by the AN, and performs verification.

In a QoS flow establishment mechanism, a signaling control QoS mechanism and a reflective QoS mechanism (used only for a QoS flow of the non-guaranteed bit rate flow type) are supported.

The method provided in embodiments of this application may be applied to a scenario in which a plurality of service flows share one fixed bandwidth, to implement differentiated scheduling on the plurality of service flows.

In a first possible application scenario, the plurality of service flows are service flows respectively corresponding to a plurality of terminal devices, and the plurality of terminal devices belong to a same terminal device group.

For example, the terminal device group includes UE 1, UE 2, and UE 3, where the UE 1 subscribes to a service A, the UE 2 subscribes to a service B, and the UE 3 subscribes to a service C. In this case, the plurality of service flows include a service flow of the service A, a service flow of the service B, and a service flow of the service C.

In addition, the terminal devices in the terminal device group may alternatively subscribe to a same service. This is not limited in this application. For example, the terminal device group includes UE 1, UE 2, and UE 3, where the UE 1 subscribes to a service A, the UE 2 subscribes to the service A, and the UE 3 subscribes to a service C. In this case, the plurality of service flows include a service flow of the service A corresponding to the UE 1, a service flow of the service A corresponding to the UE 2, and a service flow of the service C.

For example, the terminal device group includes UE 1, UE 2, and UE 3, where the UE 1 subscribes to a service A, the UE 2 subscribes to a service B, and the UE 3 subscribes to a service C and a service D. In this case, the plurality of service flows include a service flow of the service A, a service flow of the service B, a service flow of the service C, and a service flow of the service D.

In a second possible application scenario, the plurality of service flows belong to a same QoS flow. In this case, the plurality of service flows are service flows respectively corresponding to a plurality of services to which one terminal device subscribes. For example, UE 1 subscribes to a service A and a service B, and a service flow of the service A and a service flow of the service B belong to a same QoS flow.

It may be understood that the foregoing two possible application scenarios are merely examples, and are not intended to limit this application. The plurality of service flows in this application are a plurality of service flows that share one fixed bandwidth.

The following describes several technical concepts in this application.

### 1. Service scheduling priority level

For any service flow in a plurality of service flows, a scheduling priority level of the service flow is a scheduling priority level of the service flow in the plurality of service flows. In other words, the scheduling priority level of the service flow is used to determine a scheduling sequence of the service flow in the plurality of service flows.

For example, a scheduling priority level of a first service flow is a scheduling priority level of the first service flow in the plurality of service flows, and the first service flow is one of the plurality of service flows.

In a possible design, in a first possible application scenario, levels of a plurality of terminal devices may be the same or different. When the plurality of terminal devices have different levels, the scheduling priority level of the first service flow may be determined based on a level of a first terminal device. The first service flow is a service flow corresponding to a service to which the first terminal device subscribes, and the first terminal device is one of the plurality of terminal devices.

When the level of the first terminal device is higher than a level of a second terminal device, the scheduling priority level of the first service flow is higher than a scheduling priority level of a second service flow. The second terminal device is one of the plurality of terminal devices, and the second service flow is a service flow corresponding to a service to which the second terminal device subscribes.

For example, a terminal device group includes UE 1, UE 2, and UE 3, where the UE 1 subscribes to a service A, the UE 2 subscribes to a service B, and the UE 3 subscribes to a service C. If a level of the UE 1 is a level 1, a level of the UE 2 is the level 1, and a level of the UE 3 is a level 2, where the level 1 is higher than the level 2, a scheduling priority level of a service flow of the service A is the same as a scheduling priority level of a service flow of the service B, and the scheduling priority level of the service flow of the service A is higher than a scheduling priority level of a service flow of the service C.

For example, a terminal device group includes UE 1, UE 2, and UE 3, where the UE 1 subscribes to a service A, the UE 2 subscribes to a service B, and the UE 3 subscribes to a service C and a service D. If the UE 1 is a gold user, the UE 2 is a silver user, and the UE 3 is a bronze user, where a level of the gold user is higher than a level of the silver user, and the level of the silver user is higher than a level of the bronze user, a scheduling priority level of a service flow of the service A is higher than a scheduling priority level of a service flow of the service B, the scheduling priority level of the service flow of the service B is higher than a scheduling priority level of a service flow of the service C, and the scheduling priority level of the service flow of the service C may be the same as a scheduling priority level of a service flow of the service D.

In a possible design, in a second possible application scenario, a scheduling priority level of each service flow may be determined based on subscription information of a terminal device.

It may be understood that the scheduling priority level of the service flow may alternatively be determined in another manner. This is not limited in this application.

### 2. Bandwidth parameter of a service flow

A bandwidth parameter of the first service flow is used as an example. The bandwidth parameter of the first service flow includes a guaranteed bandwidth of the first service flow and/or a maximum bandwidth of the first service flow, or the bandwidth parameter of the first service flow may include a guaranteed bandwidth ratio of the first service flow and/or a maximum bandwidth ratio of the first service flow.

The guaranteed bandwidth ratio of the first service flow is a ratio of the guaranteed bandwidth of the first service flow to a total bandwidth, and the guaranteed bandwidth may also be referred to as a reserved bandwidth. When an actual bandwidth of the first service flow is lower than the guaranteed bandwidth, the first service flow is not subject to management and control processing. However, it does not mean that the actual bandwidth of the first service flow is necessarily higher than the guaranteed bandwidth.

The maximum bandwidth ratio of the first service flow is a ratio of the maximum bandwidth that can be occupied by the first service flow to the total bandwidth. The maximum bandwidth ratio of the first service flow may also be referred to as a maximum burst bandwidth ratio of the first service flow, and the maximum bandwidth is also a maximum bandwidth ratio occupied by the service during running in a QoS policy. When the actual bandwidth of the first service flow exceeds the maximum bandwidth, traffic of the first service flow that exceeds the maximum bandwidth limit is managed and controlled.

It should be noted that the total bandwidth herein is a shared bandwidth allocated to the plurality of service flows, that is, one fixed bandwidth. The total bandwidth may also be referred to as a pipe bandwidth. The guaranteed bandwidth of the first service flow may be obtained by multiplying the total bandwidth by the guaranteed bandwidth ratio of the first service flow, and the maximum bandwidth of the first service flow may be obtained by multiplying the total bandwidth by the maximum bandwidth ratio of the first service flow.

Based on this, this application provides a service flow scheduling method. As shown in FIG. 2, the method includes the following steps.

Step 200: A user plane network element obtains a scheduling priority level of a first service flow, where the scheduling priority level of the first service flow is a scheduling priority level of the first service flow in a plurality of service flows, and the first service flow is one of the plurality of service flows.

For related descriptions of scheduling priority levels of the plurality of service flows and the scheduling priority level of the first service flow, refer to the foregoing related content. Details are not described herein again.

In a possible implementation, the user plane network element may configure the scheduling priority levels of the plurality of service flows in advance, or the user plane network element may obtain the scheduling priority levels of the plurality of service flows from another network element (for example, a session management network element). The following uses only an example in which the user plane network element obtains the scheduling priority level of the first service flow for description.

In addition, the user plane network element may further obtain a bandwidth parameter of the first service flow. A specific manner in which the user plane network element obtains the bandwidth parameter of the first service flow is similar to a specific manner in which the user plane network element obtains the scheduling priority level of the first service flow. For specific content included in the bandwidth parameter of the first service flow, refer to the foregoing related content. Details are not described herein again.

For example, the user plane network element may receive a first rule from the session management network element, where the first rule indicates the scheduling priority level of the first service flow. Optionally, the first rule further indicates the bandwidth parameter of the first service flow.

The first rule may be a packet detection rule (packet detection rule, PDR).

For example, the session management network element receives a policy and charging control (policy and charging control, PCC) rule from a policy control network element, where the policy and charging control rule indicates the scheduling priority level of the first service flow. The session management network element may determine the first rule according to the policy and charging control rule, and send the first rule to the user plane network element.

In an example, the policy and charging control rule includes a name of a first predefined rule. The session management network element may determine the first rule according to the policy and charging control rule, where the first rule includes the name of the first predefined rule.

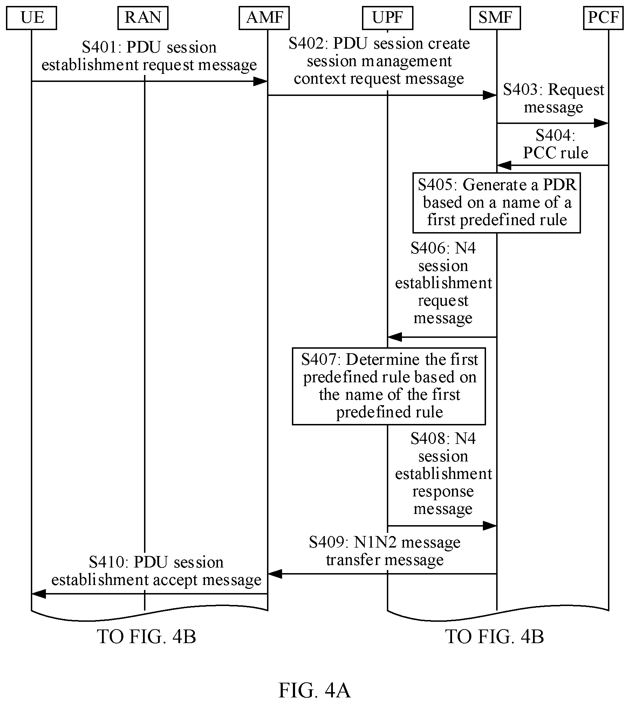

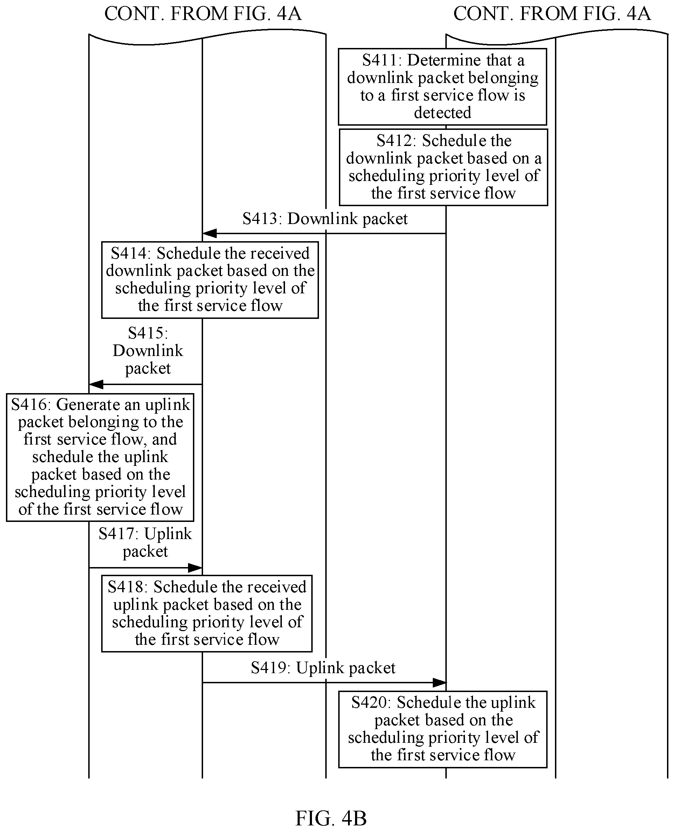

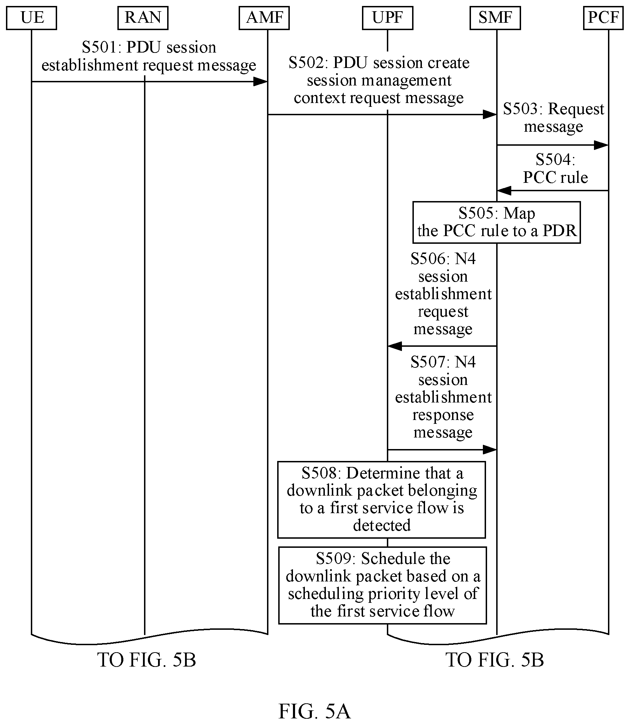

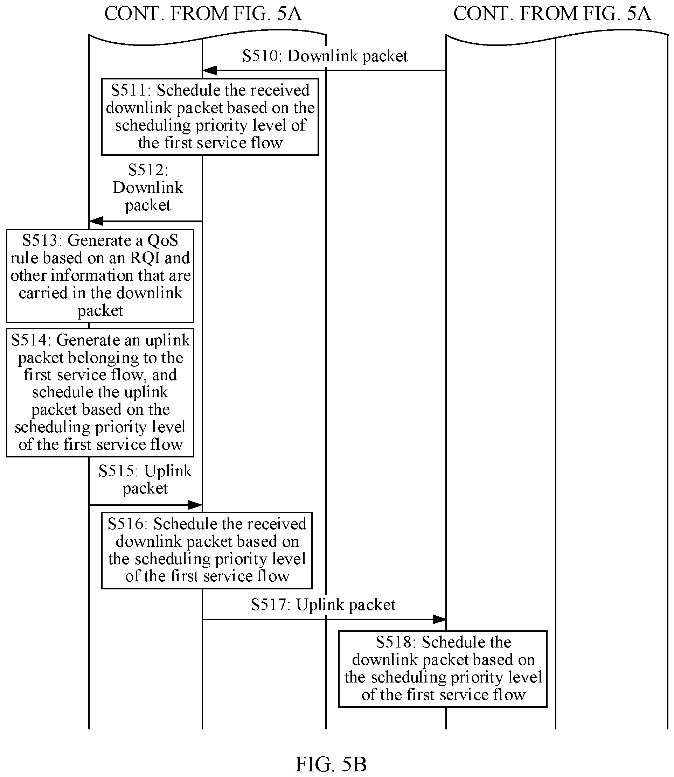

The first predefined rule includes the scheduling priority level of the first service flow, and the first predefined rule is one of a plurality of predefined rules stored by the session management network element and the user plane network element. Optionally, the first predefined rule further includes the bandwidth parameter of the first service flow. For details, refer to the following embodiments shown in FIG. 4A and FIG. 4B, and FIG. 5A and FIG. 5B.

It should be noted that a part of content (referred to as a first part of content) of the first predefined rule stored by the session management network element and another part of content (referred to as a second part of content) of the first predefined rule stored by the user plane network element jointly constitute the first predefined rule. The first part of content and the second part of content may have overlapping content, and also have non-overlapping content.

In addition, in the second possible application scenario, the first predefined rule may further include a reflective QoS indication (reflective QoS indication, RQI). If the first predefined rule does not include the reflective QoS indication, the session management network element may further determine a QoS rule according to the policy and charging control rule, where the QoS rule includes the scheduling priority level of the first service flow. The session management network element sends the QoS rule to a terminal device. Optionally, if the first predefined rule further includes the bandwidth parameter of the first service flow, the QoS rule further includes the bandwidth parameter of the first service flow.

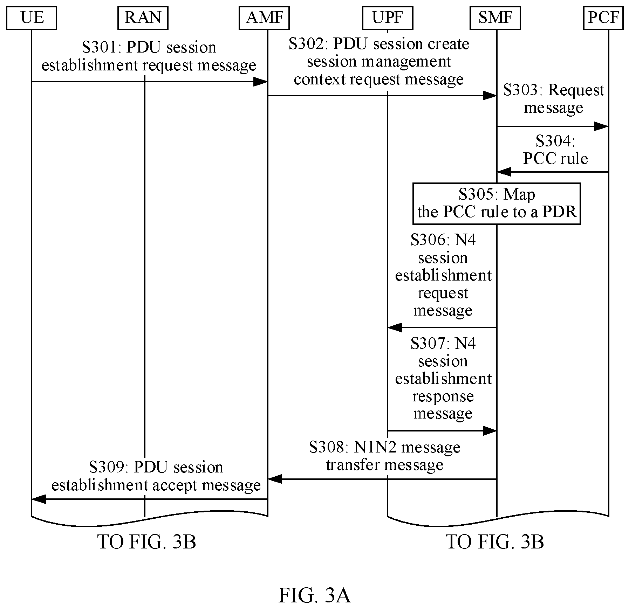

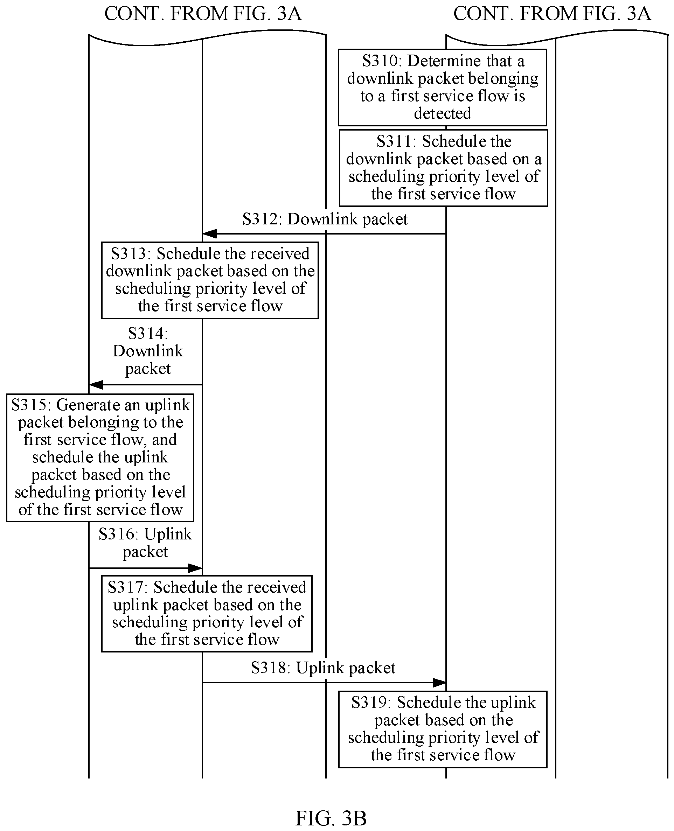

In another example, in the second possible application scenario, the session management network element may determine the first rule according to the policy and charging control rule, where the first rule includes an identifier of a QoS enforcement rule (QoS enforcement rule, QER), and the QoS enforcement rule includes the scheduling priority level of the first service flow. In other words, the session management network element may extend the scheduling priority level of the first service flow to the QoS enforcement rule referenced by the first rule. Optionally, if the policy and charging control rule further includes the bandwidth parameter of the first service flow, the QoS enforcement rule may further include the bandwidth parameter of the first service flow. For details, refer to the following embodiment shown in FIG. 3A and FIG. 3B.

In addition, the policy and charging control rule may further include a reflective QoS indication, and the first rule may further include the reflective QoS indication. If the policy and charging control rule does not include the reflective QoS indication, the session management network element may further determine a QoS rule according to the policy and charging control rule, where the QoS rule includes the scheduling priority level of the first service flow. The session management network element sends the QoS rule to a terminal device. Optionally, if the policy and charging control rule further includes the bandwidth parameter of the first service flow, the QoS rule may further include the bandwidth parameter of the first service flow.

Step 210: The user plane network element receives a packet.

For example, the packet herein may be an uplink packet or a downlink packet. This is not limited in this application.

For example, if the packet is a downlink packet, the user plane network element may add the scheduling priority level of the first service flow to the downlink packet, to obtain a first to-be-sent downlink packet, and the user plane network element sends the first to-be-sent downlink packet to an access network device.

The first to-be-sent downlink packet includes a general packet radio service tunneling protocol (GPRS tunneling protocol, GTP) packet header, and the general packet radio service tunneling protocol packet header includes the scheduling priority level of the first service flow.

In a possible design, in the second possible application scenario, in addition to adding the scheduling priority level of the first service flow to the downlink packet, the user plane network element may further add the reflective QoS indication and a QoS flow identifier of a QoS flow to the downlink packet, to obtain a second to-be-sent downlink packet, and the user plane network element sends the second to-be-sent downlink packet to the access network device. The reflective QoS indication and the QoS flow identifier of the QoS flow may alternatively be carried in the general packet radio service tunneling protocol packet header.

Step 220: The user plane network element schedules the first service flow based on the scheduling priority level of the first service flow when the packet belongs to the first service flow.

For example, the user plane network element may determine, based on packet detection information (packet detection information, PDI) in the packet detection rule, that the detected packet belongs to the first service flow.

For example, the user plane network element may schedule the first service flow based on the scheduling priority level of the first service flow by using but not limited to the following rules:

First, the user plane network element may determine whether a sum of required bandwidths respectively corresponding to the plurality of service flows is greater than a total bandwidth. If the sum of the required bandwidths respectively corresponding to the plurality of service flows is less than or equal to the total bandwidth, the user plane network element may ensure the required bandwidths respectively corresponding to the plurality of service flows.

If the sum of the required bandwidths respectively corresponding to the plurality of service flows is greater than the total bandwidth, that is, the total bandwidth is insufficient, the user plane network element may schedule the plurality of service flows according to the following rules:

### Rule (1):

The user plane network element schedules the plurality of service flows in descending order of scheduling priority levels of the plurality of service flows, so that a sum of actual bandwidths respectively corresponding to the plurality of service flows is equal to the total bandwidth. In other words, the sum of the actual bandwidths respectively corresponding to the plurality of service flows equals the total bandwidth as much as possible. It may also be described as that the sum of the actual bandwidths respectively corresponding to the plurality of service flows is close to the total bandwidth.

### Rule (2):

If the plurality of service flows include a second service flow, and a guaranteed bandwidth of the second service flow is greater than a required bandwidth of the second service flow, a bandwidth that is equal to the required bandwidth of the second service flow is allocated to the second service flow. Further, based on the scheduling priority levels respectively corresponding to the plurality of service flows and the required bandwidths respectively corresponding to the plurality of service flows, a difference bandwidth is allocated to service flows in the plurality of service flows except the second service flow in descending order of scheduling priority levels, where the difference bandwidth is a difference between the guaranteed bandwidth of the second service flow and the required bandwidth of the second service flow.

By using the foregoing rule, for a service flow whose guaranteed bandwidth is greater than a required bandwidth, the required bandwidth of the service flow can be ensured, and based on scheduling priority levels and required bandwidths of other service flows, the difference bandwidth is allocated to the service flows, thereby improving utilization efficiency of the total bandwidth.

### Rule (3):

The user plane network element preferentially meets guaranteed bandwidth ratios respectively corresponding to the plurality of service flows, where a sum of the guaranteed bandwidth ratios respectively corresponding to the plurality of service flows is less than or equal to 1. After the guaranteed bandwidth ratios respectively corresponding to the plurality of service flows are met, based on the scheduling priority levels respectively corresponding to the plurality of service flows and the required bandwidths respectively corresponding to the plurality of service flows, a remaining bandwidth is allocated to some or all of the plurality of service flows in descending order of scheduling priority levels. In this way, a ratio of an actual bandwidth of each service flow to the total bandwidth is greater than or equal to a guaranteed bandwidth ratio of the service flow.

In a possible implementation, when the remaining bandwidth is allocated to the some or all of the plurality of service flows in descending order of scheduling priority levels, required bandwidths of the some or all of the plurality of service flows are met in the order. In this way, a required bandwidth of a service flow with a high scheduling priority level is preferentially met.

In a possible implementation, when the remaining bandwidth is allocated to the some or all of the plurality of service flows in descending order of scheduling priority levels, maximum bandwidth ratios of the some or all of the plurality of service flows are met in the order. In this way, a maximum bandwidth ratio of a service flow with a high scheduling priority level is preferentially met.

For example, when the remaining bandwidth is allocated to the some or all of the plurality of service flows in descending order of scheduling priority levels, if the remaining bandwidth is less than a difference between a required bandwidth of a service flow with a highest scheduling priority level and a guaranteed bandwidth of the service flow with the highest scheduling priority level, the remaining bandwidth is completely allocated to the service flow with the highest scheduling priority level.

If the remaining bandwidth is greater than the difference between the required bandwidth of the service flow with the highest scheduling priority level and the guaranteed bandwidth of the service flow with the highest scheduling priority level, the required bandwidths of the some or all of the plurality of service flows are met in the order.

If the remaining bandwidth is greater than the difference between the required bandwidth of the service flow with the highest scheduling priority level and the guaranteed bandwidth of the service flow with the highest scheduling priority level, and the remaining bandwidth is less than or equal to a difference between a maximum bandwidth of the service flow with the highest scheduling priority level and the guaranteed bandwidth of the service flow with the highest scheduling priority level, the remaining bandwidth is completely allocated to the service flow with the highest scheduling priority level.

If the remaining bandwidth is greater than the difference between the maximum bandwidth of the service flow with the highest scheduling priority level and the guaranteed bandwidth of the service flow with the highest scheduling priority level, the maximum bandwidth ratios of the some or all of the plurality of service flows are met in the order.

For example, it is assumed that the total bandwidth is 10 G, the plurality of service flows include a service flow A and a service flow B, and a scheduling priority level of the service flow A is lower than a scheduling priority level of the service flow B. A bandwidth parameter of the service flow A includes a guaranteed bandwidth ratio 30% of the service flow A and a maximum bandwidth ratio 50% of the service flow A. A bandwidth parameter of the service flow B includes a guaranteed bandwidth ratio 40% of the service flow B and a maximum bandwidth ratio 60% of the service flow B. If a required bandwidth of the service flow A is 5 G, and a required bandwidth of the service flow B is 6 G, a sum of the required bandwidth of the service flow A and the required bandwidth of the service flow B is 13 G, and is greater than 10 G. If the guaranteed bandwidth ratio of the service flow A and the guaranteed bandwidth ratio of the service flow B are preferentially met, a bandwidth allocated to the service flow A is 3 G, and a bandwidth allocated to the service flow B is 4 G. In this case, a remaining total bandwidth 3 G is not allocated, and may be preferentially allocated to the service flow B. Because the required bandwidth of the service flow B is 6 G, finally, an actual bandwidth of the service flow A is 4 G, and an actual bandwidth of the service flow B is 6 G. In this case, the required bandwidth of the service flow B can be preferentially met.

For another example, it is assumed that the total bandwidth is 10 G, and the plurality of service flows include a service flow A, a service flow B, and a service flow C. Arrangement in descending order of scheduling priority levels is: the service flow B, the service flow C, and the service flow A. A bandwidth parameter of the service flow A includes a guaranteed bandwidth ratio 30% of the service flow A and a maximum bandwidth ratio 50% of the service flow A. A bandwidth parameter of the service flow B includes a guaranteed bandwidth ratio 40% of the service flow B and a maximum bandwidth ratio 60% of the service flow B. A bandwidth parameter of the service flow C includes a guaranteed bandwidth ratio 10% of the service flow C and a maximum bandwidth ratio 30% of the service flow C. If a required bandwidth of the service flow A is 5 G, a required bandwidth of the service flow B is 7 G, and a required bandwidth of the service flow Cis 3 G, a sum of the required bandwidth of the service flow A, the required bandwidth of the service flow B, and the required bandwidth of the service flow C is 14 G, and is greater than 10 G. If the guaranteed bandwidth ratio of the service flow A, the guaranteed bandwidth ratio of the service flow B, and the guaranteed bandwidth ratio of the service flow C are preferentially met, a bandwidth allocated to the service flow A is 3 G, a bandwidth allocated to the service flow B is 4 G, and a bandwidth allocated to the service flow C is 1 G. In this case, a remaining total bandwidth 2 G is not allocated, and may be preferentially allocated to the service flow B. Finally, an actual bandwidth of the service flow A is 3 G, an actual bandwidth of the service flow B is 6 G, and an actual bandwidth of the service flow Cis 1 G.

It should be noted that various rules may be designed based on a required bandwidth, a guaranteed bandwidth, and a maximum bandwidth that are of each service flow, and a total bandwidth. The foregoing rules and examples are not intended to limit embodiments of this application.

It may be understood that the embodiment shown in FIG. 2 may be further applied to a 4th generation mobile communication technology (4th generation mobile communication technology, 4G) communication system. Specifically, the user plane network element may be replaced with a data gateway control plane (PGW user plane, PGW-U), the QoS flow may be replaced with a dedicated bearer, the session management network element may be replaced with a data gateway control plane (PGW control plane, PGW-C), and the policy control network element may be replaced with a policy and charging rules function (policy and charging rules function, PCRF) unit.

The following describes the embodiment shown in FIG. 2 with reference to specific embodiments.

FIG. 3A and FIG. 3B show a first specific procedure of service flow scheduling in a 5G communication system. The embodiment shown in FIG. 3A and FIG. 3B is applied to the second possible application scenario. The policy control network element is a PCF, the session management network element is an SMF, the user plane network element is a UPF, the terminal device is UE, and the first rule is a PDR. The procedure may include the following steps.

S301: The UE sends a PDU session establishment request (PDU Session Establishment Request) message to the AMF.

For example, the UE is activated in a 5G network, and initiates a PDU session establishment procedure. The PDU session establishment request message includes an identifier of the UE. For example, the identifier of the UE may be an international mobile subscriber identification number (international mobile subscriber identification number, IMSI) or a mobile station international subscriber director number (mobile station international ISDN number, MSISDN). This is not limited in this application.

S302: The AMF sends a PDU session create session management context request (Nsmf_PDUSession_Create-SMContext Request) message to the SMF.

The PDU session create session management context request message includes the identifier of the UE.

S303: The SMF sends a request message to the PCF, where the request message is used to request a PCC rule.

For example, the SMF sends a session management policy control create request (Npcf_SMPolicy-Control_Create Request) message to the PCF through an N7 interface. The session management policy control create request message includes the identifier of the UE.

S304: The PCF sends the PCC rule to the SMF.

For example, the PCF queries for a subscription rule of the UE based on the identifier of the UE, where the subscription rule of the UE includes a scheduling priority level of a first service flow. Optionally, the subscription rule of the UE may further include a bandwidth parameter of the first service flow, and the bandwidth parameter of the first service flow includes a guaranteed bandwidth ratio of the first service flow and/or a maximum bandwidth ratio of the first service flow.

The subscription rule of the UE may also be referred to as subscription information of the UE. It may be understood that the subscription rule of the UE includes scheduling priority levels of a plurality of service flows. The plurality of service flows include the first service flow. Only the first service flow is used as an example herein for description. For different service flows, the PCF may send different PCC rules to the SMF.

For example, the PCF sends a session management policy control create response (Npcf_SMPolicy-Control_Create Response) message to the SMF through the N7 interface, where the message includes the PCC rule. The PCC rule includes the scheduling priority level of the first service flow. Optionally, the PCC rule further includes the bandwidth parameter of the first service flow.

S305: The SMF maps the PCC rule to the PDR.

For example, the PDR includes a QER ID, and a QER includes the scheduling priority level of the first service flow. Optionally, the QER further includes the bandwidth parameter of the first service flow.

In addition, in a possible implementation, the bandwidth parameter that is of the first service flow and that is in the QER may alternatively be replaced with a guaranteed bandwidth of the first service flow and/or a maximum bandwidth of the first service flow. In other words, when the bandwidth parameter of the first service flow includes the guaranteed bandwidth ratio of the first service flow, the guaranteed bandwidth of the first service flow is obtained through calculation based on a total bandwidth corresponding to a QoS flow and the guaranteed bandwidth ratio of the first service flow. When the bandwidth parameter of the first service flow includes the maximum bandwidth ratio of the first service flow, the maximum bandwidth of the first service flow is obtained through calculation based on the total bandwidth corresponding to the QoS flow and the maximum bandwidth ratio of the first service flow.

S306: The SMF sends an N4 session establishment request (N4 Session Establishment/Modification Request) message to the UPF, where the message includes the PDR determined in S305.

S307: The UPF sends an N4 session establishment response (N4 Session Establishment/Modification Response) message to the SMF.

The UPF may install the received PDR for packet matching and determining of a QFI of the first service flow and the scheduling priority level of the first service flow.

In addition, the PDR further includes PDI, and the PDI includes an application identifier of the first service flow. The UPF may use the application identifier of the first service flow as a service awareness condition, record the application identifier in a context of the PDR, and start identification of the first service flow.

It may be understood that the N4 session establishment request message in S306 may alternatively be replaced with an N4 session modification request (N4 Session Modification Request) message. Correspondingly, the N4 session establishment response message in S307 may alternatively be replaced with an N4 session modification response (N4 Session Establishment/Modification Response) message.

S308: The SMF sends an N1N2 message transfer (Narnf_Communication_NIN2MessageTransfer) message to the AMF, where the message includes an N1 session management container (SM container), and the N1 session management container includes a PDU session establishment accept (PDU Session Establishment Accept) message. The PDU session establishment accept message includes a QoS rule.

For example, the SMF generates the QoS rule based on the PCC rule and 5-tuple information of the first service flow, where the QoS rule includes the scheduling priority level of the first service flow. Optionally, the QoS rule further includes the bandwidth parameter of the first service flow. The 5-tuple information includes a source address, a target address, a source port, a target port, and a protocol number.

S309: The AMF sends the PDU session establishment accept message to the UE through a RAN.

The UE may install the received QoS rule for packet matching and determining of the QFI of the first service flow and the scheduling priority level of the first service flow.

It may be understood that the foregoing procedure may alternatively be replaced with a session update or modification procedure. For example, when the UE subscribes to a new service, the UPF and the UE may obtain a scheduling priority level of a service flow of the new service by performing the session update procedure or the session modification procedure.

S310: The UPF determines that a downlink packet belonging to the first service flow is detected.

For example, the PDR further includes the PDI, and the PDI may include L3 layer information and L4 layer information such as an IP address and a port (Port), or may be L7 layer information such as an application identifier (application ID) or a uniform resource locator (uniform resource locator, URL). The UPF may determine, based on the PDI, whether the received packet belongs to the first service flow.

The application identifier may be mapped to a plurality of application filtering conditions predefined on the UPF, for example, information such as an application name, an IP address, and a port, for a subsequent matching procedure.

For example, when the PDI includes the application identifier of the first service flow, the UPF may determine, based on the PDR, whether an application identifier in the downlink packet matches the application identifier of the first service flow; and if the application identifier in the downlink packet matches the application identifier of the first service flow, the UPF determines that the downlink packet belonging to the first service flow is detected.

S311: The UPF schedules the downlink packet based on the scheduling priority level of the first service flow.

For example, the UPF executes, based on the QER identifier included in the PDR, a QoS policy defined in the QER. The UPF schedules the downlink packet based on at least one service flow included in the QoS flow in which the first service flow is located and the scheduling priority level that is of the first service flow and that is included in the QER. Optionally, if the QER further includes the bandwidth parameter of the first service flow, the UPF further schedules the downlink packet based on the bandwidth parameter that is of the first service flow and that is included in the QER.

For a specific scheduling manner, refer to the related description in step 220.

S312: The UPF sends the downlink packet to the RAN.

For example, the UPF adds the scheduling priority level of the first service flow to the downlink packet, and sends the downlink packet including the scheduling priority level of the first service flow to the RAN. For example, the UPF adds the scheduling priority level of the first service flow to a GTP header of the downlink packet. In addition, the GTP header may further include the QFI. In addition, optionally, the UPF may further add the bandwidth parameter of the first service flow to the downlink packet.

S313: The RAN schedules the received downlink packet based on the scheduling priority level of the first service flow.

For example, the RAN may determine, based on the QFI and the scheduling priority level of the first service flow that are in the GTP header, the at least one service flow included in the QoS flow indicated by the QFI, and then schedule the downlink packet based on the at least one service flow included in the QoS flow indicated by the QFI and the scheduling priority level of the first service flow. In addition, optionally, if the downlink packet further includes the bandwidth parameter of the first service flow, the RAN schedules the downlink packet based on the bandwidth parameter of the first service flow.

For a specific scheduling manner, refer to the related description in step 220.

S314: The RAN sends the downlink packet to the UE.

For example, the RAN may alternatively add the scheduling priority level of the first service flow to the UE through air interface extension.

For example, the RAN decapsulates the packet received from a core network (namely, the UPF), to obtain the QFI and the scheduling priority level of the first service flow that are carried in the GTP packet header, and original packet content, then re-encapsulates the original packet content and the scheduling priority level of the first service flow in an encapsulation format of an air interface, and sends a re-encapsulated packet to the UE.

S315: The UE generates an uplink packet belonging to the first service flow, and schedules the uplink packet based on the scheduling priority level of the first service flow.

For example, the UE generates the uplink packet, determines that the uplink packet belongs to the first service flow and determines the QoS flow in which the first service flow is located, obtains the corresponding QoS rule through matching, determines the scheduling priority level of the first service flow according to the QoS rule, and schedules the uplink packet based on the at least one service flow included in the QoS flow and the scheduling priority level of the first service flow. In addition, optionally, if the QoS rule further includes the bandwidth parameter of the first service flow, the UE further schedules the downlink packet based on the bandwidth parameter of the first service flow.

For a specific scheduling manner, refer to the related description in step 220.

S316: The UE sends the uplink packet to the RAN.

For example, the UE may add the scheduling priority level of the first service flow to the uplink packet, and send the uplink packet including the scheduling priority level of the first service flow to the RAN. For example, the UE may encapsulate packet content and the scheduling priority level of the first service flow in the encapsulation format of the air interface, and send an encapsulated packet to the RAN. In addition, the UE may further add the QFI to the uplink packet. Optionally, the UE may further add the bandwidth parameter of the first service flow to the uplink packet.

S317: The RAN schedules the received uplink packet based on the scheduling priority level of the first service flow.

For example, the RAN may determine, based on the QFI and the scheduling priority level of the first service flow that are in the received uplink packet, the QoS flow indicated by the QFI and the at least one service flow included in the QoS flow, and then schedule the received uplink packet based on the at least one service flow included in the QoS flow and the scheduling priority level of the first service flow. In addition, optionally, if the uplink packet further includes the bandwidth parameter of the first service flow, the RAN further schedules the uplink packet based on the bandwidth parameter of the first service flow.

For a specific scheduling manner, refer to the related description in step 220.

S318: The RAN sends the uplink packet to the UPF.

For example, the RAN may add the scheduling priority level of the first service flow to the uplink packet, and send the uplink packet including the scheduling priority level of the first service flow to the UPF. For example, the uplink packet including the scheduling priority level of the first service flow includes a GTP header, and the GTP header includes the scheduling priority level of the first service flow. In addition, the GTP header may further include a QFI. Optionally, the RAN may add the bandwidth parameter of the first service flow to the uplink packet.

S319: The UPF schedules the uplink packet based on the scheduling priority level of the first service flow.

For example, the UPF determines that the QFI in the received packet matches the previously received PDR. Further, the UPF executes, based on the QER identifier included in the PDR, the QoS policy defined in the QER. The UPF schedules the uplink packet based on the at least one service flow included in the QoS flow in which the first service flow is located and the scheduling priority level that is of the first service flow and that is included in the QER. Optionally, if the QER further includes the bandwidth parameter of the first service flow, the UPF further schedules the uplink packet based on the bandwidth parameter of the first service flow.

For a specific scheduling manner, refer to the related description in step 220.

By using the foregoing design, scheduling priority levels of different service flows in one QoS flow can be distinguished, and scheduling can be performed based on the scheduling priority levels of the different service flows. In addition, a guaranteed bandwidth of a service flow with a low scheduling priority level and a maximum bandwidth of a service flow with a high scheduling priority level can be ensured.

FIG. 4A and FIG. 4B show a second specific procedure of service flow scheduling in a 5G communication system. The embodiment shown in FIG. 4A and FIG. 4B is applied to the second possible application scenario. The policy control network element is a PCF, the session management network element is an SMF, the user plane network element is a UPF, the terminal device is UE, and the first rule is a PDR. The procedure may include the following steps.

S401: The UE sends a PDU session establishment request message to the AMF.

S402: The AMF sends a PDU session create session management context request message to the SMF.

S403: The SMF sends a request message to the PCF, where the request message is used to request a PCC rule.

For S401 to S403, refer to the descriptions of S301 to S303 in the embodiment shown in FIG. 3A. Details are not described again.

S404: The PCF sends the PCC rule to the SMF, where the PCC rule includes a name of a first predefined rule.

S405: The SMF generates a PDR based on the name of the first predefined rule.

The PDR includes the name of the first predefined rule.

S406: The SMF sends an N4 session establishment request message to the UPF, where the message includes the PDR.

S407: The UPF determines the first predefined rule based on the name of the first predefined rule.

The first predefined rule includes a scheduling priority level of a first service flow. Optionally, the first predefined rule further includes a bandwidth parameter of the first service flow.

The UPF may install the first predefined rule for packet matching and determining of a QFI of the first service flow and the scheduling priority level of the first service flow.

In addition, the PDR further includes PDI, and the PDI includes an application identifier of the first service flow. The UPF may use the application identifier of the first service flow as a service awareness condition, record the application identifier in a context of the PDR, and start identification of the first service flow.

S408: The UPF sends an N4 session establishment response message to the SMF.

In addition, the N4 session establishment request message in S406 may alternatively be replaced with an N4 session modification request message. Correspondingly, the N4 session establishment response message in S408 may alternatively be replaced with an N4 session modification response message.

S409: The SMF sends an N1N2 message transfer message to the AMF, where the message includes an N1 session management container, and the N1 session management container includes a PDU session establishment accept message. The PDU session establishment accept message includes a QoS rule.

For example, the SMF generates the QoS rule based on the first predefined rule and 5-tuple information of the first service flow, where the QoS rule includes the scheduling priority level of the first service flow. Optionally, the QoS rule further includes the bandwidth parameter of the first service flow.

S410: The AMF sends the PDU session establishment accept message to the UE through a RAN.

The UE may install the received QoS rule for packet matching and determining of the QFI of the first service flow and the scheduling priority level of the first service flow.

It may be understood that the foregoing procedure may alternatively be replaced with a session update or modification procedure.

S411: The UPF determines that a downlink packet belonging to the first service flow is detected.

S412: The UPF schedules the downlink packet based on the scheduling priority level of the first service flow.

For example, the UPF schedules the downlink packet based on at least one service flow included in a QoS flow in which the first service flow is located and the scheduling priority level that is of the first service flow and that is included in the first predefined rule. Optionally, if the first predefined rule further includes the bandwidth parameter of the first service flow, the UPF further schedules the downlink packet based on the bandwidth parameter of the first service flow.

For a specific scheduling manner, refer to the related description in step 220.

S413: The UPF sends the downlink packet to the RAN.

S414: The RAN schedules the received downlink packet based on the scheduling priority level of the first service flow.

S415: The RAN sends the downlink packet to the UE.

S416: The UE generates an uplink packet belonging to the first service flow, and schedules the uplink packet based on the scheduling priority level of the first service flow.

S417: The UE sends the uplink packet to the RAN.

S418: The RAN schedules the received uplink packet based on the scheduling priority level of the first service flow.

S419: The RAN sends the uplink packet to the UPF.

For S413 to S419, refer to the descriptions of S312 to S318 in the embodiment shown in FIG. 3B. Details are not described again.

S420: The UPF schedules the uplink packet based on the scheduling priority level of the first service flow.

For example, the UPF determines that the QFI in the received packet matches the previously received PDR. Further, the UPF schedules the uplink packet based on the at least one service flow included in the QoS flow in which the first service flow is located and the scheduling priority level that is of the first service flow and that is included in the first predefined rule. Optionally, if the first predefined rule further includes the bandwidth parameter of the first service flow, the UPF further schedules the uplink packet based on the bandwidth parameter of the first service flow.

For a specific scheduling manner, refer to the related description in step 220.

By using the foregoing design, scheduling priority levels of different service flows in one QoS flow can be distinguished, and scheduling can be performed based on the scheduling priority levels of the different service flows. In addition, a guaranteed bandwidth of a service flow with a low scheduling priority level and a maximum burst bandwidth of a service flow with a high scheduling priority level can be ensured.

FIG. 5A and FIG. 5B show a third specific procedure of service flow scheduling in a 5G communication system. The embodiment shown in FIG. 5A and FIG. 5B is applied to the second possible application scenario. The policy control network element is a PCF, the session management network element is an SMF, the user plane network element is a UPF, the terminal device is UE, and the first rule is a PDR.

The following procedure is described by using only an example in which a PCC rule includes an RQI. In addition, in a possible implementation, the PCC rule may further include a name of a predefined rule, and the predefined rule includes the RQI.

The procedure may include the following steps.

S501: The UE sends a PDU session establishment request message to the AMF.

S502: The AMF sends a PDU session create session management context request message to the SMF.

S503: The SMF sends a request message to the PCF, where the request message is used to request the PCC rule.

For S501 to S503, refer to the descriptions of S301 to S303 in the embodiment shown in FIG. 3A. Details are not described again.

S504: The PCF sends the PCC rule to the SMF.

For example, the PCF sends a session management policy control create response (Npcf_SMPolicy-Control_Create Response) message to the SMF through an N7 interface, where the message includes the PCC rule. The PCC rule includes a scheduling priority level of a first service flow and the RQI. Optionally, the PCC rule further includes a bandwidth parameter of the first service flow.

S505: The SMF maps the PCC rule to the PDR.

For example, the PDR includes a QER ID, and a QER includes the scheduling priority level of the first service flow and the RQI. Optionally, the QER further includes the bandwidth parameter of the first service flow.

S506: The SMF sends an N4 session establishment request message to the UPF, where the message includes the PDR determined in S505.

S507: The UPF sends an N4 session establishment response message to the SMF.

The UPF may install the received PDR for packet matching and determining of a QFI of the first service flow and the scheduling priority level of the first service flow.

In addition, the PDR further includes PDI, and the PDI includes an application identifier of the first service flow. The UPF may use the application identifier of the first service flow as a service awareness condition, record the application identifier in a context of the PDR, and start identification of the first service flow.

In addition, the N4 session establishment request message in S506 may alternatively be replaced with an N4 session modification request message. Correspondingly, the N4 session establishment response message in S507 may alternatively be replaced with an N4 session modification response message.

S508: The UPF determines that a downlink packet belonging to the first service flow is detected.

S509: The UPF schedules the downlink packet based on the scheduling priority level of the first service flow.

S510: The UPF sends the downlink packet to a RAN.

For example, the UPF adds the scheduling priority level of the first service flow and the RQI to the downlink packet, and sends the downlink packet including the scheduling priority level of the first service flow and the RQI to the RAN. For example, the UPF adds the scheduling priority level of the first service flow and the RQI to a GTP header of the downlink packet. In addition, the GTP header may further include the QFI. In addition, optionally, the UPF may further add the bandwidth parameter of the first service flow to the downlink packet.

S511: The RAN schedules the received downlink packet based on the scheduling priority level of the first service flow.

For example, the RAN may determine, based on the QFI and the scheduling priority level of the first service flow that are in the GTP header, at least one service flow included in a QoS flow indicated by the QFI, and then schedule the downlink packet based on the at least one service flow included in the QoS flow and the scheduling priority level of the first service flow. In addition, optionally, if the downlink packet further includes the bandwidth parameter of the first service flow, the RAN further schedules the downlink packet based on the bandwidth parameter of the first service flow.

For a specific scheduling manner, refer to the related description in step 220.

S512: The RAN sends the downlink packet to the UE.

For example, the RAN may alternatively add the scheduling priority level of the first service flow to the UE through air interface extension.

S513: The UE generates a QoS rule based on the RQI and other information that are carried in the downlink packet.

For example, the UE generates the QoS rule in an uplink direction based on the QFI, the scheduling priority level of the first service flow, the RQI, and a 5-tuple (including a source IP+port, a target IP+port, and an L4 protocol (Protocol)) of the first service flow that are carried in the downlink packet.

In addition, optionally, if the downlink packet further includes the bandwidth parameter of the first service flow, the QoS rule generated by the UE further includes the bandwidth parameter of the first service flow.

S514: The UE generates an uplink packet belonging to the first service flow, and schedules the uplink packet based on the scheduling priority level of the first service flow.

S515: The UE sends the uplink packet to the RAN.

S516: The RAN schedules the received uplink packet based on the scheduling priority level of the first service flow.

S517: The RAN sends the uplink packet to the UPF.

S518: The UPF schedules the uplink packet based on the scheduling priority level of the first service flow.

For S514 to S518, refer to the descriptions of S315 to S319 in the embodiment shown in FIG. 3B. Details are not described again.

By using the foregoing design, scheduling priority levels of different service flows in one QoS flow can be distinguished, and scheduling can be performed based on the scheduling priority levels of the different service flows. In addition, a guaranteed bandwidth of a service flow with a low scheduling priority level and a maximum bandwidth of a service flow with a high scheduling priority level can be ensured. In addition, by using the foregoing design, signaling consumption required for transmitting the QoS rule from the SMF to the UE can be further reduced, and the QoS rule can be quickly generated.

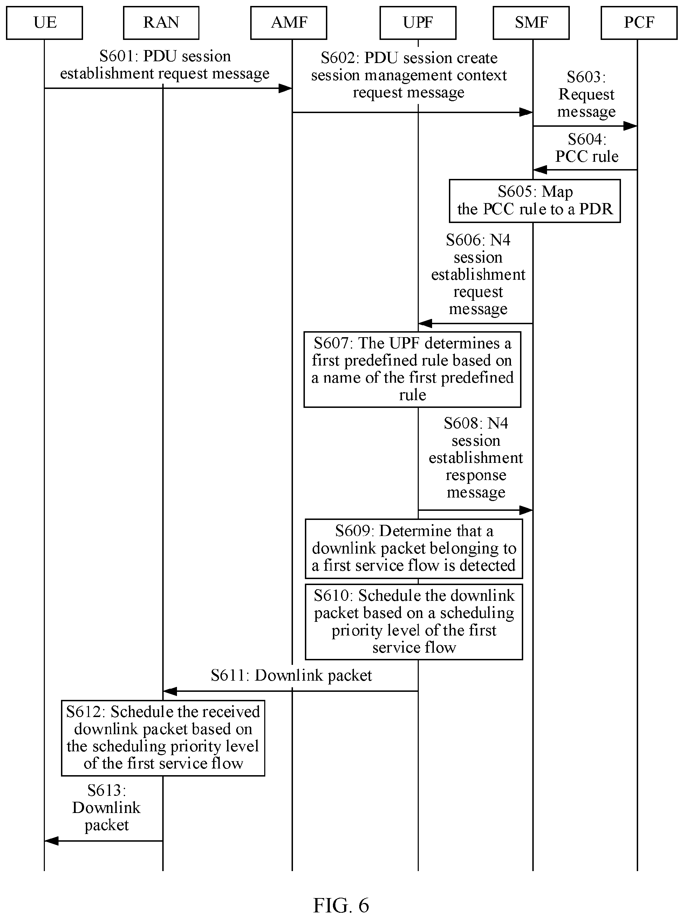

FIG. 6 shows a fourth specific procedure of service flow scheduling in a 5G communication system. The embodiment shown in FIG. 6 is applied to the first possible application scenario. The policy control network element is a PCF, the session management network element is an SMF, the user plane network element is a UPF, the terminal device is UE, and the first rule is a PDR. The procedure may include the following steps.

S601: The UE sends a PDU session establishment request message to the AMF.

S602: The AMF sends a PDU session create session management context request message to the SMF.

S603: The SMF sends a request message to the PCF, where the request message is used to request a PCC rule.

For S601 to S603, refer to the descriptions of S301 to S303 in the embodiment shown in FIG. 3A. Details are not described again.

S604: The PCF sends the PCC rule to the SMF, where the PCC rule includes a name of a first predefined rule.

S605: The SMF generates a PDR based on the name of the first predefined rule.

The PDR includes the name of the first predefined rule.

S606: The SMF sends an N4 session establishment request message to the UPF, where the message includes the PDR.

S607: The UPF determines the first predefined rule based on the name of the first predefined rule.

The first predefined rule includes a scheduling priority level of a first service flow. Optionally, the first predefined rule further includes a bandwidth parameter of the first service flow.

The UPF may install the first predefined rule. For example, the first predefined rule may also be referred to as a group-level bandwidth control policy. The group-level bandwidth control policy is an overall bandwidth control policy that is for services of a terminal device group and that is formed based on a condition. A plurality of service flows formed by at least one service flow corresponding to each terminal device in the terminal device group share one fixed bandwidth, that is, the plurality of service flows corresponding to the terminal device group share one fixed bandwidth.

For example, the terminal device group may be determined based on subscription information, an access point (access point name, APN), an access network type, a roaming attribute, location information, and the like.

For example, by using the APN, terminal devices accessed by xxx form a terminal device group. When all terminal devices in the terminal device group access a service A, a bandwidth allowed to be accessed by a plurality of service flows formed by a service flow of the service A corresponding to each terminal device in the terminal device group is 5 Gbps, that is, a bandwidth shared by the plurality of service flows is 5 Gbps.

S608: The UPF sends an N4 session establishment response message to the SMF.

In addition, the N4 session establishment request message in S606 may alternatively be replaced with an N4 session modification request message. Correspondingly, the N4 session establishment response message in S608 may alternatively be replaced with an N4 session modification response message.

S609: The UPF determines that a downlink packet belonging to the first service flow is detected.

S610: The UPF schedules the downlink packet based on the scheduling priority level of the first service flow.

For example, the UPF schedules the downlink packet based on the plurality of service flows corresponding to the terminal device group and the scheduling priority level that is of the first service flow and that is included in the first predefined rule. Optionally, if the first predefined rule further includes the bandwidth parameter of the first service flow, the UPF further schedules the downlink packet based on the bandwidth parameter of the first service flow.

For a specific scheduling manner, refer to the related description in step 220.

S611: The UPF sends the downlink packet to the RAN.

For example, the UPF adds the scheduling priority level of the first service flow to the downlink packet, and sends the downlink packet including the scheduling priority level of the first service flow to a RAN. For example, the UPF adds the scheduling priority level of the first service flow to a GTP header of the downlink packet. In addition, optionally, the UPF may further add the bandwidth parameter of the first service flow to the downlink packet.

S612: The RAN schedules the received downlink packet based on the scheduling priority level of the first service flow.

For example, the RAN may schedule the downlink packet based on the plurality of service flows corresponding to the terminal device group and the scheduling priority level of the first service flow. In addition, optionally, if the downlink packet further includes the bandwidth parameter of the first service flow, the RAN further schedules the downlink packet based on the bandwidth parameter of the first service flow.

For a specific scheduling manner, refer to the related description in step 220.

S613: The RAN sends the downlink packet to the UE.

For example, the RAN may alternatively add the scheduling priority level of the first service flow to the UE through air interface extension.

For example, the RAN decapsulates the packet received from a core network (namely, the UPF), to obtain original packet content, and the scheduling priority level that is of the first service flow and that is carried in the GTP packet header, then re-encapsulates the original packet content and the scheduling priority level of the first service flow in an encapsulation format of an air interface, and sends a re-encapsulated packet to the UE.

By using the foregoing design, scheduling priority levels of different service flows in a plurality of service flows corresponding to one terminal device group can be distinguished, and scheduling can be performed based on the scheduling priority levels of the different service flows. In addition, a guaranteed bandwidth of a service flow with a low scheduling priority level and a maximum bandwidth of a service flow with a high scheduling priority level can be ensured.

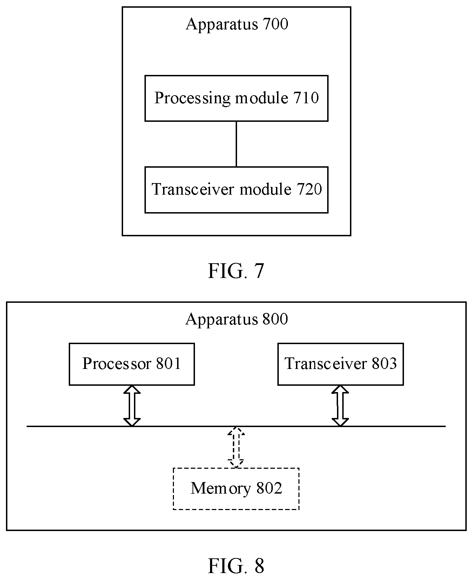

FIG. 7 is a possible example block diagram of a communication apparatus according to an embodiment of this application. The apparatus 700 includes a transceiver module 720 and a processing module 710. The transceiver module 720 may include a receiving unit and a sending unit. The processing module 710 is configured to control and manage an action of the apparatus 700. The transceiver module 720 is configured to support the apparatus 700 in communicating with another network entity. Optionally, the apparatus 700 may further include a storage unit. The storage unit is configured to store program code and data of the apparatus 700.

Optionally, each module in the apparatus 700 may be implemented by software.

Optionally, the processing module 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The controller/processor can implement or execute various example logical blocks, modules, and circuits described with reference to content disclosed in embodiments of this application. The processor may alternatively be a combination of processors implementing a computing function, for example, a combination of one or more microprocessors, or a combination of the DSP and a microprocessor. The transceiver module 720 may be a communication interface, a transceiver, a transceiver circuit, or the like. The communication interface is a general term. During specific implementation, the communication interface may include a plurality of interfaces. The storage unit may be a memory.

When the apparatus 700 is a user plane network element or a chip in a user plane network element, the processing module 710 in the apparatus 700 can support the apparatus 700 in performing actions of the user plane network element in the foregoing method examples.

The transceiver module 720 can support the apparatus 700 in communicating with a session management network element.

The transceiver module 720 is configured to: obtain a scheduling priority level of a first service flow, where the scheduling priority level of the first service flow is a scheduling priority level of the first service flow in a plurality of service flows, and the first service flow is one of the plurality of service flows; and receive a packet.

The processing module 710 is configured to schedule the first service flow based on the scheduling priority level of the first service flow when the packet belongs to the first service flow.

In a possible design, the transceiver module 720 is configured to receive a first rule from a session management network element when obtaining the scheduling priority level of the first service flow, where the first rule indicates the scheduling priority level of the first service flow.

In a possible design, the first rule includes a name of a first predefined rule, the first predefined rule includes the scheduling priority level of the first service flow, and the first predefined rule is one of a plurality of predefined rules stored by the user plane network element.

In a possible design, when the plurality of service flows belong to a same QoS flow, the first rule includes an identifier of a QoS enforcement rule, and the QoS enforcement rule includes the scheduling priority level of the first service flow.

In a possible design, the transceiver module 720 is further configured to obtain a bandwidth parameter of the first service flow, where the bandwidth parameter of the first service flow includes a guaranteed bandwidth of the first service flow and/or a maximum bandwidth of the first service flow, or the bandwidth parameter of the first service flow includes a guaranteed bandwidth ratio of the first service flow and/or a maximum bandwidth ratio of the first service flow, where the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

In a possible design, the processing module 710 is configured to: in a case of scheduling the first service flow based on the scheduling priority level of the first service flow, when a sum of required bandwidths respectively corresponding to the plurality of service flows is greater than the total bandwidth, if the plurality of service flows include a second service flow, and a guaranteed bandwidth of the second service flow is greater than a required bandwidth of the second service flow, allocate a bandwidth that is equal to the required bandwidth of the second service flow to the second service flow; and based on scheduling priority levels respectively corresponding to the plurality of service flows and the required bandwidths respectively corresponding to the plurality of service flows, allocate a difference bandwidth to service flows in the plurality of service flows except the second service flow in descending order of scheduling priority levels, where the difference bandwidth is a difference between the guaranteed bandwidth of the second service flow and the required bandwidth of the second service flow.

In a possible design, the processing module 710 is configured to: in a case of scheduling the first service flow based on the scheduling priority level of the first service flow, when a sum of required bandwidths respectively corresponding to the plurality of service flows is greater than the total bandwidth, if the required bandwidths respectively corresponding to the plurality of service flows are all greater than corresponding guaranteed bandwidths, meet guaranteed bandwidth ratios respectively corresponding to the plurality of service flows, where a sum of the guaranteed bandwidth ratios respectively corresponding to the plurality of service flows is less than or equal to 1; and after the guaranteed bandwidth ratios respectively corresponding to the plurality of service flows are met, allocate, based on scheduling priority levels respectively corresponding to the plurality of service flows, a remaining bandwidth to some or all of the plurality of service flows in descending order of scheduling priority levels.

In a possible design, the processing module 710 is configured to: when the remaining bandwidth is allocated to some or all of the plurality of service flows in descending order of scheduling priority levels, meet maximum bandwidth ratios of the some or all of the plurality of service flows in the order.

In a possible design, a sum of actual bandwidths respectively corresponding to the plurality of service flows is equal to the total bandwidth.

In a possible design, the packet is a downlink packet; and the processing module 710 is configured to add the scheduling priority level of the first service flow to the downlink packet, to obtain a first to-be-sent downlink packet.

The transceiver module 720 is configured to send the first to-be-sent downlink packet to an access network device.

In a possible design, the first to-be-sent downlink packet includes a general packet radio service tunneling protocol packet header, and the general packet radio service tunneling protocol packet header includes the scheduling priority level of the first service flow.

In a possible design, the plurality of service flows are service flows respectively corresponding to a plurality of terminal devices, and the plurality of terminal devices belong to a same terminal device group.

In a possible design, the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

In a possible design, the plurality of service flows belong to a same QoS flow.

It should be understood that the apparatus 700 according to this embodiment of this application may correspond to the user plane network element in the foregoing method embodiments, and operations and/or functions of the modules in the apparatus 700 are separately used to implement corresponding steps of the method performed by the user plane network element in the foregoing method embodiments. Therefore, beneficial effects in the foregoing method embodiments can also be implemented. For brevity, details are not described herein again.

When the apparatus 700 is a session management network element or a chip in a session management network element, the processing module 710 in the apparatus 700 can support the apparatus 700 in performing actions of the session management network element in the foregoing method examples.

The transceiver module 720 can support the apparatus 700 in communicating with a user plane network element.

The processing module 710 invokes the transceiver module 720 to perform the following operations: obtain a scheduling priority level of a first service flow, where the scheduling priority level of the first service flow is a scheduling priority level of the first service flow in a plurality of service flows, and the first service flow is one of the plurality of service flows; and send a first rule to a user plane network element, where the first rule indicates the scheduling priority level of the first service flow.

In a possible design, the transceiver module 720 is configured to: when obtaining the scheduling priority level of the first service flow, receive a policy and charging control rule from a policy control network element, where the policy and charging control rule indicates the scheduling priority level of the first service flow; and the processing module 710 is configured to determine the first rule according to the policy and charging control rule.

In a possible design, the policy and charging control rule includes a name of a first predefined rule, and the first rule includes the name of the first predefined rule.

The first predefined rule includes the scheduling priority level of the first service flow, and the first predefined rule is one of a plurality of predefined rules stored by the session management network element and the user plane network element.

In a possible design, when the plurality of service flows belong to a same QoS flow, the first rule includes an identifier of a QoS enforcement rule, and the QoS enforcement rule includes the scheduling priority level of the first service flow.

In a possible design, the processing module 710 is configured to: when the plurality of service flows belong to the same QoS flow, determine a QoS rule according to the policy and charging control rule, where the QoS rule includes the scheduling priority level of the first service flow.

The transceiver module 720 is configured to send the QoS rule to a terminal device.

In a possible design, the transceiver module 720 is further configured to obtain a bandwidth parameter of the first service flow, where the bandwidth parameter of the first service flow includes a guaranteed bandwidth of the first service flow and/or a maximum bandwidth of the first service flow, or the bandwidth parameter of the first service flow includes a guaranteed bandwidth ratio of the first service flow and/or a maximum bandwidth ratio of the first service flow, where the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

In a possible design, the plurality of service flows are service flows respectively corresponding to a plurality of terminal devices, and the plurality of terminal devices belong to a same terminal device group.

In a possible design, the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

In a possible design, the plurality of service flows belong to a same QoS flow.

It should be understood that the apparatus 700 according to this embodiment of this application may correspond to the session management network element in the foregoing method embodiments, and operations and/or functions of the modules in the apparatus 700 are separately used to implement corresponding steps of the method performed by the session management network element in the foregoing method embodiments. Therefore, beneficial effects in the foregoing method embodiments can also be implemented. For brevity, details are not described herein again.

When the apparatus 700 is an access network device or a chip in an access network device, the processing module 710 in the apparatus 700 can support the apparatus 700 in performing actions of the access network device in the foregoing method examples.

The transceiver module 720 can support the apparatus 700 in communicating with a user plane network element.

The transceiver module 720 is configured to receive a packet in a first service flow, where the packet includes a scheduling priority level of the first service flow, the scheduling priority level of the first service flow is a scheduling priority level of the first service flow in a plurality of service flows, and the first service flow is one of the plurality of service flows.

The processing module 710 is configured to schedule the first service flow based on the scheduling priority level of the first service flow.

In a possible design, the packet further includes a bandwidth parameter of the first service flow, where the bandwidth parameter of the first service flow includes a guaranteed bandwidth of the first service flow and/or a maximum bandwidth of the first service flow, or the bandwidth parameter of the first service flow includes a guaranteed bandwidth ratio of the first service flow and/or a maximum bandwidth ratio of the first service flow, where the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

In a possible design, the processing module 710 is configured to: in a case of scheduling the first service flow based on the scheduling priority level of the first service flow, when a sum of required bandwidths respectively corresponding to the plurality of service flows is greater than the total bandwidth, if the plurality of service flows include a second service flow, and a guaranteed bandwidth of the second service flow is greater than a required bandwidth of the second service flow, allocate a bandwidth that is equal to the required bandwidth of the second service flow to the second service flow; and based on scheduling priority levels respectively corresponding to the plurality of service flows and the required bandwidths respectively corresponding to the plurality of service flows, allocate a difference bandwidth to service flows in the plurality of service flows except the second service flow in descending order of scheduling priority levels, where the difference bandwidth is a difference between the guaranteed bandwidth of the second service flow and the required bandwidth of the second service flow.

In a possible design, the processing module 710 is configured to: in a case of scheduling the first service flow based on the scheduling priority level of the first service flow, when a sum of required bandwidths respectively corresponding to the plurality of service flows is greater than the total bandwidth, if the required bandwidths respectively corresponding to the plurality of service flows are all greater than corresponding guaranteed bandwidths, meet guaranteed bandwidth ratios respectively corresponding to the plurality of service flows, where a sum of the guaranteed bandwidth ratios respectively corresponding to the plurality of service flows is less than or equal to 1; and after the guaranteed bandwidth ratios respectively corresponding to the plurality of service flows are met, allocate, based on scheduling priority levels respectively corresponding to the plurality of service flows, a remaining bandwidth to some or all of the plurality of service flows in descending order of scheduling priority levels.

In a possible design, the processing module 710 is configured to: when the remaining bandwidth is allocated to some or all of the plurality of service flows in descending order of scheduling priority levels, meet maximum bandwidth ratios of the some or all of the plurality of service flows in the order.

In a possible design, a sum of actual bandwidths respectively corresponding to the plurality of service flows is equal to the total bandwidth.

In a possible design, the packet includes a general packet radio service tunneling protocol packet header, and the general packet radio service tunneling protocol packet header includes the scheduling priority level of the first service flow.

In a possible design, the plurality of service flows are service flows respectively corresponding to a plurality of terminal devices, and the plurality of terminal devices belong to a same terminal device group.

In a possible design, the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

In a possible design, the plurality of service flows belong to a same QoS flow.

It should be understood that the apparatus 700 according to this embodiment of this application may correspond to the access network device in the foregoing method embodiments, and operations and/or functions of the modules in the apparatus 700 are separately used to implement corresponding steps of the method performed by the access network device in the foregoing method embodiments. Therefore, beneficial effects in the foregoing method embodiments can also be implemented. For brevity, details are not described herein again.

FIG. 8 is a diagram of a structure of a communication apparatus 800 according to an embodiment of this application. As shown in FIG. 8, the apparatus 800 includes a processor 801.

When the apparatus 800 is a user plane network element or a chip in a user plane network element, in a possible implementation, the processor 801 is configured to invoke an interface to perform the following actions:
obtain a scheduling priority level of a first service flow, where the scheduling priority level of the first service flow is a scheduling priority level of the first service flow in a plurality of service flows, and the first service flow is one of the plurality of service flows; receive a packet; and schedule the first service flow based on the scheduling priority level of the first service flow when the packet belongs to the first service flow.

It should be understood that the apparatus 800 may be further configured to perform other steps and/or operations on the user plane network element side in the foregoing embodiments. For brevity, details are not described herein again.

When the apparatus 800 is a session management network element or a chip in a session management network element, in a possible implementation, the processor 801 is configured to invoke an interface to perform the following actions:
obtain a scheduling priority level of a first service flow, where the scheduling priority level of the first service flow is a scheduling priority level of the first service flow in a plurality of service flows, and the first service flow is one of the plurality of service flows; and send a first rule to a user plane network element, where the first rule indicates the scheduling priority level of the first service flow.

It should be understood that the apparatus 800 may be further configured to perform other steps and/or operations on the session management network element side in the foregoing embodiments. For brevity, details are not described herein again.

When the apparatus 800 is an access network device or a chip in an access network device, in a possible implementation, the processor 801 is configured to invoke an interface to perform the following actions: receive a packet in a first service flow, where the packet includes a scheduling priority level of the first service flow, the scheduling priority level of the first service flow is a scheduling priority level of the first service flow in a plurality of service flows, and the first service flow is one of the plurality of service flows; and schedule the first service flow based on the scheduling priority level of the first service flow.

It should be understood that the apparatus 800 may be further configured to perform other steps and/or operations on the access network device side in the foregoing embodiments. For brevity, details are not described herein again.

It should be understood that the processor 801 may invoke an interface to perform the foregoing receiving and sending actions. The invoked interface may be a logical interface or a physical interface. This is not limited. Optionally, the physical interface may be implemented by using a transceiver. Optionally, the apparatus 800 further includes a transceiver 803.

Optionally, the apparatus 800 further includes a memory 802, and the memory 802 may store program code in the foregoing method embodiments, so that the processor 801 invokes the program code.

Specifically, if the apparatus 800 includes the processor 801, the memory 802, and the transceiver 803, the processor 801, the memory 802, and the transceiver 803 communicate with each other through an inner connection path, to transmit a control signal and/or a data signal. In a possible design, the processor 801, the memory 802, and the transceiver 803 may be implemented by using a chip. The processor 801, the memory 802, and the transceiver 803 may be implemented in a same chip, or may be separately implemented in different chips, or functions of any two of the processor 801, the memory 802, and the transceiver 803 are implemented in one chip. The memory 802 may store the program code, and the processor 801 invokes the program code stored in the memory 802, to implement a corresponding function of the apparatus 800.

The method disclosed in the foregoing embodiments of this application may be applied to the processor, or may be implemented by the processor. The processor may be an integrated circuit chip and has a signal processing capability. In an implementation process, steps in the foregoing method embodiments may be completed by using an integrated logic circuit of hardware in the processor or instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware assembly, a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip. The processor can implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean an execution sequence in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A service flow scheduling method, wherein the method comprises:
obtaining, by a user plane network element, a scheduling priority level of a first service flow, wherein the scheduling priority level of the first service flow is a scheduling priority level of the first service flow in a plurality of service flows, and the first service flow is one of the plurality of service flows;
receiving, by the user plane network element, a packet; and
scheduling, by the user plane network element, the first service flow based on the scheduling priority level of the first service flow when the packet belongs to the first service flow.

2. The method according to claim 1, wherein the obtaining, by a user plane network element, a scheduling priority level of a first service flow comprises:
receiving, by the user plane network element, a first rule from a session management network element, wherein the first rule indicates the scheduling priority level of the first service flow.

3. The method according to claim 2, wherein the first rule comprises a name of a first predefined rule, the first predefined rule comprises the scheduling priority level of the first service flow, and the first predefined rule is one of a plurality of predefined rules stored by the user plane network element.

4. The method according to claim 3, wherein when the plurality of service flows belong to a same QoS flow, the first rule comprises an identifier of a QoS enforcement rule, and the QoS enforcement rule comprises the scheduling priority level of the first service flow.

5. The method according to any one of claims 1 to 4, further comprising:
further obtaining, by the user plane network element, a bandwidth parameter of the first service flow, wherein
the bandwidth parameter of the first service flow comprises a guaranteed bandwidth of the first service flow and/or a maximum bandwidth of the first service flow, or the bandwidth parameter of the first service flow comprises a guaranteed bandwidth ratio of the first service flow and/or a maximum bandwidth ratio of the first service flow, wherein the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

6. The method according to claim 5, wherein the scheduling, by the user plane network element, the first service flow based on the scheduling priority level of the first service flow comprises:
when a sum of required bandwidths respectively corresponding to the plurality of service flows is greater than the total bandwidth, if the plurality of service flows comprise a second service flow, and a guaranteed bandwidth of the second service flow is greater than a required bandwidth of the second service flow, allocating a bandwidth that is equal to the required bandwidth of the second service flow to the second service flow; and
allocating, based on scheduling priority levels respectively corresponding to the plurality of service flows and the required bandwidths respectively corresponding to the plurality of service flows, a difference bandwidth to service flows in the plurality of service flows except the second service flow in descending order of scheduling priority levels, wherein the difference bandwidth is a difference between the guaranteed bandwidth of the second service flow and the required bandwidth of the second service flow.

7. The method according to claim 5, wherein the scheduling, by the user plane network element, the first service flow based on the scheduling priority level of the first service flow comprises:
when a sum of required bandwidths respectively corresponding to the plurality of service flows is greater than the total bandwidth, if the required bandwidths respectively corresponding to the plurality of service flows are all greater than corresponding guaranteed bandwidths, meeting guaranteed bandwidth ratios respectively corresponding to the plurality of service flows, wherein a sum of the guaranteed bandwidth ratios respectively corresponding to the plurality of service flows is less than or equal to 1; and
after the guaranteed bandwidth ratios respectively corresponding to the plurality of service flows are met, allocating, based on scheduling priority levels respectively corresponding to the plurality of service flows and the required bandwidths respectively corresponding to the plurality of service flows, a remaining bandwidth to some or all of the plurality of service flows in descending order of scheduling priority levels.

8. The method according to claim 7, wherein the allocating a remaining bandwidth to some or all of the plurality of service flows in descending order of scheduling priority levels comprises:
meeting maximum bandwidth ratios of the some or all of the plurality of service flows in the order.

9. The method according to any one of claims 6 to 8, wherein a sum of actual bandwidths respectively corresponding to the plurality of service flows is equal to the total bandwidth.

10. The method according to any one of claims 1 to 9, wherein the packet is a downlink packet; and
the method further comprises:
adding, by the user plane network element, the scheduling priority level of the first service flow to the downlink packet, to obtain a first to-be-sent downlink packet; and
sending, by the user plane network element, the first to-be-sent downlink packet to an access network device.

11. The method according to claim 10, wherein the first to-be-sent downlink packet comprises a general packet radio service tunneling protocol packet header, and the general packet radio service tunneling protocol packet header comprises the scheduling priority level of the first service flow.

12. The method according to any one of claims 1 to 3 and 5 to 11, wherein the plurality of service flows are service flows respectively corresponding to a plurality of terminal devices, and the plurality of terminal devices belong to a same terminal device group.

13. The method according to claim 12, wherein the plurality of terminal devices have different levels, the scheduling priority level of the first service flow is determined based on a level of a first terminal device, the first service flow is a service flow corresponding to a service to which the first terminal device subscribes, and the first terminal device is one of the plurality of terminal devices.

14. The method according to any one of claims 1 to 11, wherein the plurality of service flows belong to a same quality of service QoS flow.

15. A service flow scheduling method, wherein the method comprises:
obtaining, by a session management network element, a scheduling priority level of a first service flow, wherein the scheduling priority level of the first service flow is a scheduling priority level of the first service flow in a plurality of service flows, and the first service flow is one of the plurality of service flows; and
sending, by the session management network element, a first rule to a user plane network element, wherein the first rule indicates the scheduling priority level of the first service flow.

16. The method according to claim 15, wherein the obtaining, by a session management network element, a scheduling priority level of a first service flow comprises:
receiving, by the session management network element, a policy and charging control rule from a policy control network element, wherein the policy and charging control rule indicates the scheduling priority level of the first service flow; and
determining, by the session management network element, the first rule according to the policy and charging control rule.

17. The method according to claim 16, wherein the policy and charging control rule comprises a name of a first predefined rule, and the first rule comprises the name of the first predefined rule; and
the first predefined rule comprises the scheduling priority level of the first service flow, and the first predefined rule is one of a plurality of predefined rules stored by the session management network element and the user plane network element.

18. The method according to claim 16, wherein when the plurality of service flows belong to a same QoS flow, the first rule comprises an identifier of a QoS enforcement rule, and the QoS enforcement rule comprises the scheduling priority level of the first service flow.

19. The method according to any one of claims 16 to 18, further comprising:
when the plurality of service flows belong to the same QoS flow, determining, by the session management network element, a QoS rule according to the policy and charging control rule, wherein the QoS rule comprises the scheduling priority level of the first service flow; and
sending, by the session management network element, the QoS rule to a terminal device.

20. The method according to any one of claims 15 to 19, further comprising:
further obtaining, by the session management network element, a bandwidth parameter of the first service flow, wherein
the bandwidth parameter of the first service flow comprises a guaranteed bandwidth of the first service flow and/or a maximum bandwidth of the first service flow, or the bandwidth parameter of the first service flow comprises a guaranteed bandwidth ratio of the first service flow and/or a maximum bandwidth ratio of the first service flow, wherein the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

21. A service flow scheduling method, wherein the method comprises:
receiving, by an access network device, a packet in a first service flow, wherein the packet comprises a scheduling priority level of the first service flow, the scheduling priority level of the first service flow is a scheduling priority level of the first service flow in a plurality of service flows, and the first service flow is one of the plurality of service flows; and
scheduling, by the access network device, the first service flow based on the scheduling priority level of the first service flow.

22. The method according to claim 21, wherein the packet further comprises a bandwidth parameter of the first service flow; and
the bandwidth parameter of the first service flow comprises a guaranteed bandwidth of the first service flow and/or a maximum bandwidth of the first service flow, or the bandwidth parameter of the first service flow comprises a guaranteed bandwidth ratio of the first service flow and/or a maximum bandwidth ratio of the first service flow, wherein the guaranteed bandwidth ratio of the first service flow is a ratio of the guaranteed bandwidth of the first service flow to a total bandwidth, the maximum bandwidth ratio of the first service flow is a ratio of the maximum bandwidth that can be occupied by the first service flow to the total bandwidth, and the total bandwidth is a shared bandwidth allocated to the plurality of service flows.

23. The method according to claim 22, wherein the scheduling, by the access network device, the first service flow based on the scheduling priority level of the first service flow comprises:
when a sum of required bandwidths respectively corresponding to the plurality of service flows is greater than the total bandwidth, if the plurality of service flows comprise a second service flow, and a guaranteed bandwidth of the second service flow is greater than a required bandwidth of the second service flow, allocating a bandwidth that is equal to the required bandwidth of the second service flow to the second service flow; and
allocating, based on scheduling priority levels respectively corresponding to the plurality of service flows and the required bandwidths respectively corresponding to the plurality of service flows, a difference bandwidth to service flows in the plurality of service flows except the second service flow in descending order of scheduling priority levels, wherein the difference bandwidth is a difference between the guaranteed bandwidth of the second service flow and the required bandwidth of the second service flow.

24. The method according to claim 22, wherein the scheduling, by the access network device, the first service flow based on the scheduling priority level of the first service flow comprises:
when a sum of required bandwidths respectively corresponding to the plurality of service flows is greater than the total bandwidth, if the required bandwidths respectively corresponding to the plurality of service flows are all greater than corresponding guaranteed bandwidths, meeting guaranteed bandwidth ratios respectively corresponding to the plurality of service flows, wherein a sum of the guaranteed bandwidth ratios respectively corresponding to the plurality of service flows is less than or equal to 1; and
after the guaranteed bandwidth ratios respectively corresponding to the plurality of service flows are met, allocating, based on scheduling priority levels respectively corresponding to the plurality of service flows and the required bandwidths respectively corresponding to the plurality of service flows, a remaining bandwidth to some or all of the plurality of service flows in descending order of scheduling priority levels.

25. The method according to claim 24, wherein the allocating a remaining bandwidth to some or all of the plurality of service flows in descending order of scheduling priority levels comprises:
meeting maximum bandwidth ratios of the some or all of the plurality of service flows in the order.

26. The method according to any one of claims 23 to 25, wherein a sum of actual bandwidths respectively corresponding to the plurality of service flows is equal to the total bandwidth.

27. The method according to any one of claims 21 to 26, wherein the packet comprises a general packet radio service tunneling protocol packet header, and the general packet radio service tunneling protocol packet header comprises the scheduling priority level of the first service flow.

28. A communication apparatus, wherein the communication apparatus is configured to perform the method according to any one of claims 1 to 14, the method according to any one of claims 15 to 20, or the method according to any one of claims 21 to 27.

29. A chip, wherein the chip is coupled to a memory, and the chip reads a computer program stored in the memory, to perform the method according to any one of claims 1 to 14, the method according to any one of claims 15 to 20, or the method according to any one of claims 21 to 27.

30. A computer-readable storage medium, wherein the storage medium stores a computer program or instructions, and when the computer program or the instructions are executed by a communication apparatus, the method according to any one of claims 1 to 14, the method according to any one of claims 15 to 20, or the method according to any one of claims 21 to 27 is implemented.

31. A computer program product comprising instructions, wherein when the instructions are run on a computer, the computer is enabled to perform the method according to any one of claims 1 to 14, the method according to any one of claims 15 to 20, or the method according to any one of claims 21 to 27.
